# EUROPEAN PATENT APPLICATION

(11) **EP 4 462 518 A1**
(43) Date of publication of application: **13.11.2024**
(21) Application number: 24744728.7
(22) Date of filing: 18.01.2024
(51) Int. Cl.: H01M 4/62, C08F 214/26, H01M 4/13, H01M 4/139

(54) **TETRAFLUOROETHYLENE-BASED POLYMER, BINDER FOR ELECTROCHEMICAL DEVICES, ELECTRODE MIX, ELECTRODE, AND SECONDARY BATTERY**

(30) Priority: 18.01.2023 JP 2023005934
(71) Applicant: DAIKIN INDUSTRIES, LTD., Osaka-shi, Osaka 530-0001 (JP)
(72) Inventor: NISHIMURA, Kenta, Osaka-Shi, Osaka 530-0001 (JP); YAMADA, Takaya, Osaka-Shi, Osaka 530-0001 (JP); YASUDA, Kohei, Osaka-Shi, Osaka 530-0001 (JP); KATO, Taketo, Osaka-Shi, Osaka 530-0001 (JP); INOUE, Ryo, Osaka-Shi, Osaka 530-0001 (JP); TOKUDA, Masato, Osaka-Shi, Osaka 530-0001 (JP); ATSUMO, Ken, Osaka-Shi, Osaka 530-0001 (JP); YAMAMOTO, Emi, Osaka-Shi, Osaka 530-0001 (JP); TERADA, Junpei, Osaka-Shi, Osaka 530-0001 (JP); YAMANAKA, Taku, Osaka-Shi, Osaka 530-0001 (JP)
(74) Representative: Hoffmann Eitle
(86) International application number: PCT/JP2024/001353
(87) International publication number: WO 2024/154808

(57) **Abstract**

The disclosure provides a tetrafluoroethylene-based polymer for use in a binder for electrochemical devices which is homogenously mixable with powder components in electrochemical devices and is capable of providing a mixture sheet having excellent strength and excellent flexibility, and also provides a binder for electrochemical devices, an electrode mixture, an electrode, and a secondary battery which are produced using the tetrafluoroethylene-based polymer. The tetrafluoroethylene-based polymer for use in a binder for electrochemical devices has an extrusion pressure at a reduction ratio of 2500 of 100 MPa or lower and is substantially free from water.

## Description

### TECHNICAL FIELD

The disclosure relates to tetrafluoroethylene-based polymers, binders for electrochemical devices, electrode mixtures, electrodes, and secondary batteries.

### BACKGROUND ART

Secondary batteries such as lithium-ion secondary batteries are used in small and portable electrical and electronic devices such as laptop PCs, cellular phones, smart phones, tablet PCs, and Ultrabooks, and are also being commercialized as a wide variety of power sources, including in-vehicle power sources for driving automobiles and the like and large power sources for stationary applications. The reason for this is that secondary batteries are high-voltage, high-energy-density batteries with low self-discharge and low memory effect and can be made extremely lightweight. Secondary batteries are now demanded to have even higher energy densities, and further improvements in battery characteristics are desired.

Patent Literature 1 discloses a free-standing solid composite electrolyte film comprising at least one sulfidebased solid ionic conducting inorganic particle and at least one tetrafluoroethylene (co)polymer.

Patent Literature 2 discloses an energy storage device in which at least one of the cathode or the anode includes a polytetrafluoroethylene composite binder material.

Patent Literature documents 3 to 7 each describe use of polytetrafluoroethylene as a binder for batteries.

### CITATION LIST

### - Patent Literature

Patent Literature 1: JP 2022-546129 T
Patent Literature 2: JP 2017-517862 T
Patent Literature 3: WO 2022/138939 A1
Patent Literature 4: WO 2022/138939 A1
Patent Literature 5: WO 2022/138939 A1
Patent Literature 6: WO 2022/138939 A1
Patent Literature 7: WO 2022/138939 A1

### SUMMARY OF INVENTION

### - Technical Problem

The disclosure aims to provide a tetrafluoroethylene-based polymer for use in a binder for electrochemical devices which is homogenously mixable with powder components in electrochemical devices and is capable of providing a mixture sheet having excellent strength and excellent flexibility. The disclosure also aims to provide a binder for electrochemical devices, an electrode mixture, an electrode, and a secondary battery which are produced using the tetrafluoroethylene-based polymer.

### - Solution to Problem

The disclosure (1) relates to a tetrafluoroethylene-based polymer for use in a binder for electrochemical devices, the tetrafluoroethylene-based polymer having an extrusion pressure at a reduction ratio of 2500 of 100 MPa or lower and being substantially free from water.

The disclosure (2) relates to a binder for electrochemical devices consisting substantially only of a tetrafluoroethylene-based polymer, the tetrafluoroethylene-based polymer having an extrusion pressure at a reduction ratio of 2500 of 100 MPa or lower and being substantially free from water.

The disclosure (3) relates to the binder for electrochemical devices according to the disclosure (2),
wherein the tetrafluoroethylene-based polymer has an extrusion pressure at a reduction ratio of 2500 of 45 MPa or higher and 65 MPa or lower.

The disclosure (4) relates to the binder for electrochemical devices according to the disclosure (2) or (3),
wherein the tetrafluoroethylene-based polymer has a standard specific gravity of 2.200 or less.

The disclosure (5) relates to the binder for electrochemical devices according to any one of the disclosures (2) to (4),
wherein the tetrafluoroethylene-based polymer has an endothermic peak temperature of 320°C or higher.

The disclosure (6) relates to the binder for electrochemical devices according to any one of the disclosures (2) to (5),
wherein the tetrafluoroethylene-based polymer is polytetrafluoroethylene.

The disclosure (7) relates to the binder for electrochemical devices according to any one of the disclosures (2) to (6),
wherein the tetrafluoroethylene-based polymer contains a tetrafluoroethylene unit and a modifying monomer unit that is based on a modifying monomer copolymerizable with tetrafluoroethylene.

The disclosure (8) relates to the binder for electrochemical devices according to the disclosure (7),
wherein the tetrafluoroethylene-based polymer contains the modifying monomer unit in an amount of 10% by mass or less.

The disclosure (9) relates to the binder for electrochemical devices according to the disclosure (8),
wherein the tetrafluoroethylene-based polymer contains the modifying monomer unit in an amount of 0.25% by mass or less.

The disclosure (10) relates to the binder for electrochemical devices according to the disclosure (8) or (9),
wherein the modifying monomer is a compound represented by the following formula (I):

CX¹X²=CX³X⁴ (I)

wherein X¹ to X³ are each independently H or F; X⁴ is F, Cl, CF₃, Rf, or O-Rf; and Rf is a perfluoro organic group.

The disclosure (11) relates to the binder for electrochemical devices according to any one of the disclosures (8) to (10),
wherein the modifying monomer is at least one selected from the group consisting of chlorotrifluoroethylene and hexafluoropropylene.

The disclosure (12) relates to the binder for electrochemical devices according to any one of the disclosures (2) to (11),
wherein the tetrafluoroethylene-based polymer is in a powder form.

The disclosure (13) relates to the binder for electrochemical devices according to any one of the disclosures (2) to (12),
wherein the tetrafluoroethylene-based polymer is substantially free from a fluorine-containing compound having a molecular weight of 1000 or less.

The disclosure (14) relates to the binder for electrochemical devices according to any one of the disclosures (2) to (13), which is a binder for batteries or a binder for capacitors.

The disclosure (15) relates to the binder for electrochemical devices according to any one of the disclosures (2) to (14), which is for secondary batteries.

The disclosure (16) relates to an electrode mixture, including an electrode active material and the tetrafluoroethylene-based polymer according to the disclosure (1) or the binder for electrochemical devices according to any one of the disclosures (2) to (15).

The disclosure (17) relates to the electrode mixture according to the disclosure (16), which is in a sheet form.

The disclosure (18) relates to an electrode, including an electrode active material, a current collector, and the tetrafluoroethylene-based polymer according to the disclosure (1) or the binder for electrochemical devices according to any one of the disclosures (2) to (15).

The disclosure (19) relates to a secondary battery including the electrode according to the disclosure (18).

### - Advantageous Effects of Invention

The disclosure can provide a tetrafluoroethylene-based polymer for use in a binder for electrochemical devices which is homogenously mixable with powder components in electrochemical devices and is capable of providing a mixture sheet having excellent strength and excellent flexibility. The disclosure can also provide a binder for electrochemical devices, an electrode mixture, an electrode, and a secondary battery which are produced using the tetrafluoroethylene-based polymer.

### BRIEF DESCRIPTION OF DRAWINGS

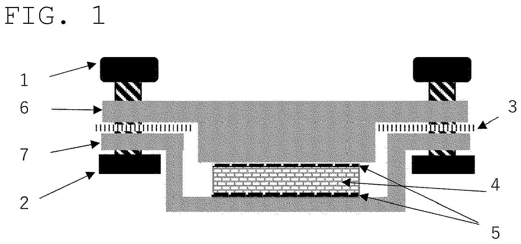

FIG. 1 is a schematic cross-sectional view of a pressure cell used in ion-conductivity measurement of solid electrolyte mixture sheets in EXAMPLES.

### DESCRIPTION OF EMBODIMENTS

The disclosure will be specifically described hereinbelow.

The disclosure provides a tetrafluoroethylene-based polymer for use in a binder for electrochemical devices, the tetrafluoroethylene-based polymer having an extrusion pressure at a reduction ratio of 2500 of 100 MPa or lower and being substantially free from water.

The tetrafluoroethylene (TFE)-based polymer of the disclosure is less likely to form aggregates with powder components, such as electrode active materials and solid electrolytes, in electrochemical devices even if they are kneaded for a long time. It is homogenously mixable with the powder components. The TFE-based polymer can provide a mixture sheet having excellent strength and excellent flexibility.

The TFE-based polymer of the disclosure is substantially free from water; hence, it can reduce or prevent gas generation inside electrochemical device cells and deterioration of the properties of electrochemical devices (e.g., a reduction in capacity when stored at high temperature). The TFE-based polymer of the disclosure does not require a large amount of a dispersion medium such as water or an organic solvent and can be combined with a wide range of electrode active materials and solid electrolytes. Thus, the polymer is advantageous for production process. Moreover, the process and cost of using dispersion media can be reduced.

Further, since the TFE-based polymer of the disclosure has a high binding force to active materials and electrolytes, the use amount thereof can be reduced.

The TFE-based polymer may be a homopolymer of TFE or a TFE copolymer containing a polymerized unit based on TFE (TFE unit) and a polymerized unit based on a modifying monomer copolymerizable with TFE (modifying monomer unit).

The TFE-based polymer may be polytetrafluoroethylene (PTFE). The PTFE may be a homopolymer of tetrafluoroethylene (TFE) or a modified PTFE.

The homopolymer of TFE refers to a polymer containing a polymerized unit based on a modifying monomer copolymerizable with TFE in an amount of less than 0.0001% by mass in all polymerized units.

The modified PTFE contains a polymerized unit based on TFE (TFE unit) and a modifying monomer unit. The modified PTFE may contain 99.0% by mass or more of the TFE unit and 1.0% by mass or less of the modifying monomer unit. The modified PTFE may consist only of the TFE unit and the modifying monomer unit.

The TFE copolymer may consist only of the TFE unit and the modifying monomer unit.

To allow the TFE-based polymer to be further homogeneously mixed with powder components in electrochemical devices and to provide mixture sheets with a higher strength and a higher flexibility, the TFE-based polymer preferably contains the modifying monomer unit in an amount falling within a range of 0.0001 to 10% by mass in all polymerized units. The lower limit of the amount of the modifying monomer unit is more preferably 0.001% by mass, still more preferably 0.010% by mass, further more preferably 0.050% by mass. The upper limit of the amount of the modifying monomer unit is preferably 5.0% by mass, more preferably 3.0% by mass, still more preferably 1.0% by mass, further more preferably 0.80% by mass, further more preferably 0.60% by mass, further more preferably 0.40% by mass, further more preferably 0.30% by mass, particularly preferably 0.25% by mass.

The modifying monomer unit as used herein means a portion that constitutes the molecular structure of the TFE-based polymer and is derived from a modifying monomer.

The amounts of the above polymerized units can be calculated by any appropriate combination of NMR, FT-IR, elemental analysis, and X-ray fluorescence analysis according to the types of the monomers.

The modifying monomer may be any monomer copolymerizable with TFE. Examples thereof include perfluoroolefins such as hexafluoropropylene (HFP); hydrogen-containing fluoroolefins such as trifluoroethylene and vinylidene fluoride (VDF); perhaloolefins such as chlorotrifluoroethylene (CTFE); perfluorovinyl ether; perfluoroallyl ether; (perfluoroalkyl)ethylene; and ethylene. One modifying monomer may be used alone or two or more modifying monomers may be used in combination.

The perfluorovinyl ether may be, but is not limited to, an unsaturated perfluoro compound represented by the following formula (A):

CF₂=CF-ORf¹ (A)

wherein Rf¹ is a perfluoro organic group. The term "perfluoro organic group" herein means an organic group in which all hydrogen atoms bonded to any carbon atom are replaced by fluorine atoms. The perfluoro organic group may have ether oxygen.

An example of the perfluorovinyl ether is a perfluoro(alkyl vinyl ethers) (PAVE) represented by the formula (A) wherein Rf¹ is a C1-C10 perfluoroalkyl group. The perfluoroalkyl group preferably contains 1 to 5 carbon atoms. The perfluoroalkyl group preferably contains 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include: those represented by the formula (A) wherein Rf¹ is a C4-C9 perfluoro(alkoxyalkyl) group; those represented by the formula (A) wherein Rf¹ is a group represented by the following formula.

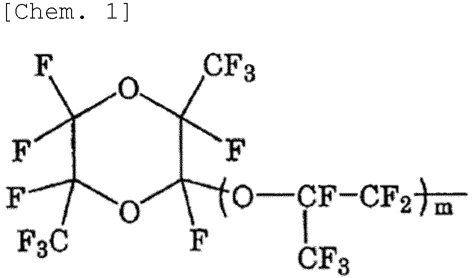

In the formula, m is 0 or an integer of 1 to 4; and those represented by the formula (A) wherein Rf1 is a group represented by the following formula.

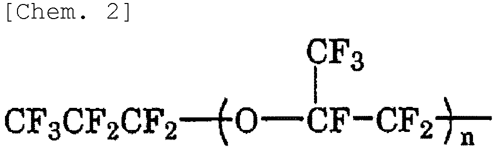

In the formula, n is an integer of 1 to 4.

Examples of the (perfluoroalkyl)ethylene (PFAE) include, but are not limited to, (perfluorobutyl)ethylene (PFBE) and (perfluorohexyl)ethylene.

An example of the perfluoroallyl ether is a fluoromonomer represented by the following formula (B):

CF₂=CF-CF₂-ORf² (B)

wherein Rf² is a perfluoro organic group.

Rf² is preferably a C1-C10 perfluoroalkyl group or a

C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

The modifying monomer is preferably a compound represented by the following formula (I):

CX¹X²=CX³X⁴ (I)

wherein X¹ to X³ are each independently H or F; X⁴ is F, Cl, Rf, or O-Rf; and Rf is a perfluoro organic group.

Rf in the formula (I) is preferably a C1-C10 perfluoroalkyl group, more preferably a C1-C5 perfluoroalkyl group, still more preferably a C1-C4 perfluoroalkyl group.

To achieve further homogeneous mixing with powder components in electrochemical devices and to provide mixture sheets with a higher strength and a higher flexibility, the modifying monomer is preferably at least one selected from the group consisting of CTFE, HFP, perfluoro(methyl vinyl ethers) (PMVE), perfluoro(propyl vinyl ethers) (PPVE), PFBE, and VDF, more preferably at least one selected from the group consisting of CTFE, HFP, PMVE, and PPVE, still more preferably at least one selected from the group consisting of CTFE, HFP, and PPVE, particularly preferably at least one selected from the group consisting of CTFE and HEP.

The TFE-based polymer of the disclosure preferably has a core-shell structure. The TFE-based polymer having a core-shell structure can be prevented from excessive fibrillation when it is mixed with powder components in electrochemical devices. Thus, a homogeneous mixture can be obtained. Examples of the TFE-based polymer having a core-shell structure include a modified PTFE including a core of high-molecular-weight PTFE and a shell of lower-molecular-weight PTFE or modified PTFE in a particle. An example of such a modified PTFE is a PTFE disclosed in JP 2005-527652 T.

In the core-shell structure, the core and the shell do not necessarily have a clear boundary between them. The modified PTFE in the core may be mingled with the modified PTFE in the shell at or around the boundary between the core and the shell.

The core in the core-shell structure preferably includes a modified PTFE having a polymerization unit based on a modifying monomer.

The modifying monomer in the core is preferably at least one selected from the group consisting of fluoro(alkyl vinyl ethers), vinyl heterocycles, and fluoroolefins, more preferably at least one selected from the group consisting of fluoro(alkyl vinyl ethers) and fluoroolefins, still more preferably at least one selected from the group consisting of PAVE, HFP, and CTFE, further preferably at least one selected from the group consisting of PAVE and CTFE, particularly preferably CTFE.

The PAVE is preferably perfluoro(propyl vinyl ethers) (PPVE).

The shell in the core-shell structure preferably includes a modified PTFE having a polymerization unit based on a modifying monomer and/or a modified PTFE obtained by polymerization using a chain transfer agent.

The modifying monomer in the shell is preferably at least one selected from the group consisting of fluoro(alkyl vinyl ethers) and fluoroolefins, more preferably at least one selected from the group consisting of PAVE, HFP, and CTFE, still more preferably at least one selected from the group consisting of HFP and CTFE, further preferably CTFE.

The chain transfer agent may be any chain transfer agent that can reduce the molecular weight of the modified PTFE in the shell. Examples thereof include non-peroxide organic compounds such as water-soluble alcohols, hydrocarbons, and fluorinated hydrocarbons, water-soluble organic peroxides such as disuccinic acid peroxide (DSP), and persulfates such as ammonium persulfate (APS) and potassium persulfate (KPS).

The chain transfer agent includes at least one of a non-peroxide organic compound, a water-soluble organic peroxide, or a persulfate.

The non-peroxide organic compound, the water-soluble organic peroxide, and the persulfate in the chain transfer agent may each be used alone or in combinations of two or more.

To allow the chain transfer agent to be better dispersed or uniform in the reaction system, the chain transfer agent preferably includes at least one selected from the group consisting of C1-C4 water-soluble alcohols, C1-C4 hydrocarbons, and C1-C4 fluorinated hydrocarbons, more preferably includes at least one selected from the group consisting of methane, ethane, n-butane, isobutane, methanol, HFC-134a, HFC-32, DSP, APS, and KPS, still more preferably includes at least one of methanol or isobutane, and particularly preferably includes methanol.

The TFE-based polymer of the disclosure is substantially free from water. This can reduce or prevent gas generation and deterioration of the properties of electrochemical devices. Moreover, the TFE-based polymer can be combined with a wide range of electrode active materials and solid electrolytes. Thus, the polymer is advantageous for production process. The phrase "substantially free from water" means that the water content of the TFE-based polymer is 0.050% by mass or less.

The water content is preferably 0.020% by mass or less, more preferably 0.010% by mass or less, still more preferably 0.005% by mass or less, further more preferably 0.003% by mass or less, further more preferably 0.002% by mass or less, further more preferably 0.001% by mass or less.

The water content is determined by the following method.

The mass of the TFE-based polymer is weighed before and after heating at 150°C for two hours, and the water content is calculated by the expression below. The sample is taken three times. The calculation is performed for each sample, and an average of the calculated values is used. Water content (% by mass) = [(mass (g) of TFE-based polymer before heating) - (mass (g) of TFE-based polymer after heating)]/(mass (g) of TFE-based polymer before heating) × 100

The TFE-based polymer of the disclosure is preferably substantially free from a fluorine-containing compound having a molecular weight of 1000 or less. The phrase "substantially free from a fluorine-containing compound" means that the amount of the fluorine-containing compound is 25 ppb by mass or less relative to the TFE-based polymer.

The amount of the fluorine-containing compound is preferably 20 ppb by mass or less, more preferably 15 ppb by mass or less, still more preferably 10 ppb by mass or less, further preferably less than 10 ppb by mass, further more preferably 1 ppb by mass or less, further more preferably less than 1 ppb by mass, particularly preferably below the lower limit of quantitation. The lower limit is not limited and may be an amount below the lower limit of quantitation.

The amount of the fluorine-containing compound having a molecular weight of 1000 or less is measured by the following method.

To a 1-g portion of a sample weighed is added 10 g (12.6 mL) of methanol, followed by ultrasonication for 60 minutes, whereby an extract is obtained. The resulting extract is appropriately concentrated by nitrogen purge, and the fluorine-containing compound in the concentrated extract is subjected to LC/MS/MS analysis. Based on the molecular weight information extracted from the LC/MS spectrum obtained, consistency with the structural formulas of the candidate fluorine-containing compounds is examined. Aqueous solutions having five or more different levels of standard substance concentrations are prepared, and LC/MS analysis is performed on the aqueous solutions containing varied amounts of the standard substance. The relation between the amount and the area relative to the amount is plotted, and a calibration curve is drawn. Based on the resulting calibration curve, the area of the fluorine-containing compound in the extract in the LC/MS chromatogram is converted to the amount of the fluorine-containing compound.

The lower limit of quantitation in this measurement method is 10 ppb by mass.

Examples of the fluorine-containing compound having a molecular weight of 1000 or less include a fluorine-containing compound containing a hydrophilic group having a molecular weight of 1000 g/mol or less. The molecular weight of the fluorine-containing compound is preferably 800 or less, more preferably 500 or less.

Polymerized particles obtained by polymerization performed in the presence of a fluorine-containing surfactant usually contain the fluorine-containing surfactant in addition to the TFE-based polymer. Herein, the fluorine-containing surfactant is used in polymerization.

The fluorine-containing compound having a molecular weight of 1000 or less may be a compound that is not added in polymerization, for example, a compound that is produced as a by-product in polymerization.

When containing an anionic portion and a cationic portion, the fluorine-containing compound having a molecular weight of 1000 or less refers to a fluorine-containing compound in which the anionic portion has a molecular weight of 1000 or less. The fluorine-containing compound having a molecular weight of 1000 or less does not include the TFE-based polymer.

The hydrophilic group may be, for example, -COOM, - SO₂M, or -SO₃M, and examples include anionic groups such as -COOM and -SO₃M wherein M is H, a metal atom, NR¹₄, imidazolium optionally containing a substituent, pyridinium optionally containing a substituent, or phosphonium optionally containing a substituent; and R¹ is H or an organic group.

The fluorine-containing surfactant may also be a fluorine-containing surfactant in which the anionic portion has a molecular weight of 1000 or less (fluorine-containing anionic surfactant). The term "anionic portion" refers to a portion excluding the cation in the fluorine-containing surfactant. For example, in the case of F(CF₂)ₙ₁COOM, the anionic portion refers to the portion "F(CF₂)ₙ₁COO".

Examples of the anionic fluorine-containing surfactant include the following formula (N⁰):

Xⁿ⁰-Rfⁿ⁰-Y⁰ (N⁰)

wherein Xⁿ⁰ is H, Cl, or F; Rfⁿ⁰ is a C3-C20 linear, branched, or cyclic alkylene group in which part or all of H atoms are replaced by F atoms, the alkylene group optionally containing one or more ether bonds with one or more H atoms being optionally replaced by Cl; and Y° is an anionic group.

The anionic group for Y° may be -COOM, -SO₂M, or - SO₃M, and may be -COOM or -SO₃M.

M is H, a metal atom, NR¹₄, imidazolium optionally containing a substituent, pyridinium optionally containing a substituent, or phosphonium optionally containing a substituent, wherein R¹ is H or an organic group.

Examples of the metal atom include an alkali metal (Group 1) and an alkaline earth metal (Group 2), such as Na, K, and Li.

R¹ may be H or a C₁₋₁₀ organic group, may be H or a C₁₋₄ organic group, or may be H or a C₁₋₄ alkyl group.

M may be H, a metal atom, or NR¹₄, may be H, an alkali metal (Group 1), an alkaline earth metal (Group 2), or NR¹₄, or may be H, Na, K, Li, or NH₄.

Rfⁿ⁰ may be one in which 50% or more of H has been replaced by fluorine.

The fluorine-containing surfactant may be a single fluorine-containing surfactant or a mixture containing two or more fluorine-containing surfactants.

Examples of the fluorine-containing surfactant include compounds represented by the following formulas.

The fluorine-containing surfactant may be a mixture of these compounds:
F(CF₂)₇COOM,
F(CF₂)₅COOM,
H(CF₂)₆COOM,
H(CF₂)₇COOM,
CF₃O(CF₂)₃OCHFCF₂COOM,
C₃F₇OCF(CF₃)CF₂OCF(CF₃)COOM,
CF₃CF₂CF₂OCF(CF₃)COOM,
CF₃CF₂OCF₂CF₂OCF₂COOM,
C₂F₅OCF(CF₃)CF₂OCF(CF₃)COOM,
CF₃OCF(CF₃)CF₂OCF(CF₃)COOM,
CF₂ClCF₂CF₂OCF(CF₃)CF₂OCF₂COOM,
CF₂ClCF₂CF₂OCF₂CF(CF₃)OCF₂COOM,
CF₂ClCF(CF₃)OCF(CF₃)CF₂OCF₂COOM,
CF₂ClCF(CF₃)OCF₂CF(CF₃)OCF₂COOM, and

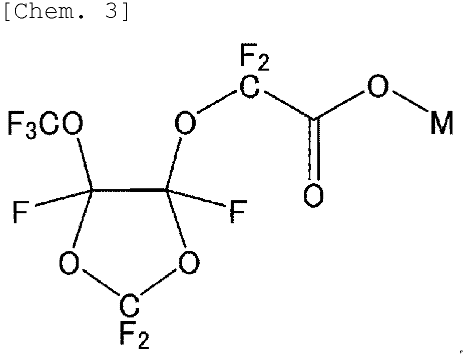

In the formulas, M is H, a metal atom, NR¹₄, imidazolium optionally containing a substituent, pyridinium optionally containing a substituent, or phosphonium optionally containing a substituent; and R1 is H or an organic group.

The TFE-based polymer of the disclosure is preferably substantially free from any of the fluorine-containing compounds represented by the above formulas.

In each of the above formulas, M may be H, a metal atom, or NR¹₄, may be H, an alkali metal (Group 1), an alkaline earth metal (Group 2), or NR¹₄, or may be H, Na, K, Li, or NH₄.

R¹ may be H or a C₁₋₁₀ organic group, may be H or a C₁₋₄ organic group, or may be H or a C₁₋₄ alkyl group.

The TFE-based polymer of the disclosure substantially free from any of the fluorine-containing compounds represented by the above formulas can further reduce or prevent gas generation and deterioration of the properties of electrochemical devices.

The phrase "substantially free from any of the fluorine-containing compounds represented by the above formulas" means that the amount of any of the fluorine-containing compounds is 25 ppb by mass or less relative to the TFE-based polymer.

The amount of any of the fluorine-containing compounds is preferably 20 ppb by mass or less, more preferably 15 ppb by mass or less, still more preferably 10 ppb by mass or less, further more preferably less than 10 ppb by mass, further more preferably 1 ppb by mass or less, further more preferably less than 1 ppb by mass, particularly preferably below the lower limit of quantitation. The lower limit is not limited, and may be an amount below the lower limit of quantitation.

The TFE-based polymer of the disclosure is also preferably substantially free from a fluorine-containing compound represented by the following formula:

[Cₙ₋₁F²ⁿ⁻¹COO₋]M⁺

wherein n is an integer of 9 to 14, preferably 9 to 12; and
M⁺ is a cation. This can further reduce or prevent gas generation and deterioration of the properties of electrochemical devices.

M constituting the cation M⁺ in the formula is the same as M mentioned above.

The phrase "substantially free from the fluorine-containing compound represented by the above formula" means that the amount of the fluorine-containing compound is 25 ppb by mass or less relative to the TFE-based polymer.

The amount of the fluorine-containing compound is preferably 20 ppb by mass or less, more preferably 15 ppb by mass or less, still more preferably 10 ppb by mass or less, further more preferably less than 10 ppb by mass, further more preferably 1 ppb by mass or less, further more preferably less than 1 ppb by mass, particularly preferably below the lower limit of quantitation. The lower limit is not limited, and may be an amount below the lower limit of quantitation.

To allow the TFE-based polymer of the disclosure to be further homogeneously mixed with powder components in electrochemical devices and to provide mixture sheets with a higher strength and a higher flexibility, the TFE-based polymer preferably has an endothermic peak temperature of 320°C or higher, more preferably 325°C or higher, still more preferably 330°C or higher, further more preferably 333°C or higher. The endothermic peak temperature is preferably 350°C or lower, more preferably 345°C or lower, still more preferably 340°C or lower.

The endothermic peak temperature is the temperature corresponding to the minimum point on a heat-of-fusion curve obtained by performing differential scanning calorimetry (DSC) at a temperature-increasing rate of 2°C/min on a TFE-based polymer that has never been heated to a temperature of 300°C or higher. When two or more minimum points are present in one melting peak, the temperatures corresponding to the respective peaks are considered as endothermic peak temperatures.

When two or more endothermic peaks are present, both of them are preferably within the above range.

The TFE-based polymer of the disclosure preferably has a non-melt secondary processability. The term "non-melt secondary processibility" refers to a property of a polymer with which the melt flow rate is non-measurable at a temperature higher than the melting point in conformity with ASTM D1238 and D2116; in other words, a property with which the polymer does not easily flow even within a melting point range.

To allow the TFE-based polymer of the disclosure to be further homogeneously mixed with powder components in electrochemical devices, the TFE-based polymer has a standard specific gravity (SSG) of preferably 2.200 or less, more preferably 2.190 or less, still more preferably 2.180 or less, further preferably 2.175 or less. To allow the TFE-based polymer to provide mixture sheets with a higher strength and a higher flexibility, the TFE-based polymer has SSG of preferably 2.130 or more, more preferably 2.140 or more, still more preferably 2.150 or more, 2.155 or more, or 2.160 or more.

The SSG is determined by the water displacement method in conformity with ASTM D792 using a sample molded in conformity with ASTM D4895.

The TFE-based polymer of the disclosure has an extrusion pressure at a reduction ratio (RR) of 2500 of 100 MPa or lower. To allow the TFE-based polymer to be further homogeneously mixed with powder components in electrochemical devices, the TFE-based polymer has an extrusion pressure at a reduction ratio of 2500 of preferably 95 MPa or lower, more preferably 90 MPa or lower, still more preferably 80 MPa or lower, further preferably 75 MPa or lower, further more preferably 70 MPa or lower, still further preferably 65 MPa or lower. To allow the TFE-based polymer to provide mixture sheets with a higher strength and a higher flexibility, the TFE-based polymer has an extrusion pressure at a reduction ratio of 2500 of preferably 35 MPa or higher, more preferably 40 MPa or higher, still more preferably 45 MPa or higher.

The extrusion pressure at a reduction ratio of 2500 is measured by the following method.

The TFE-based polymer in an amount of 60 g is mixed with 12.3 of a hydrocarbon oil (trade name: Isopar G (registered trademark), ExxonMobil Corp.) as an extruding aid in a polyethylene container for three minutes. The resulting mixture is packed in a cylinder of an extruder at room temperature (25 12°C). A load of 0.47 MPa is applied to a piston inserted into the cylinder and maintained for one minute. Then, the mixture was extruded through an orifice (diameter: 0.5 mm, land length: 1.5 mm, introduction angle: 30°) at a ram speed of 20 mm/min. A ratio of the cross-sectional area of the cylinder to the cross-sectional area of the orifice is 2500. The value obtained by dividing the load (N) at which the pressure is in equilibrium in the latter half of the extrusion operation by the cross-sectional area of the cylinder is defined as the extrusion pressure (MPa).

The TFE-based polymer of the disclosure may be in any form and is preferably in a powder form so that it can be mixed with an electrode active material or a solid electrolyte without a large amount of dispersion medium.

To achieve excellent handleability, the TFE-based polymer of the disclosure may have an average secondary particle size of 350 um or greater, preferably 400 um or greater, more preferably 450 um or greater, still more preferably 500 um or greater, while preferably 1000 um or smaller, more preferably 900 um or smaller, still more preferably 800 um or smaller, further more preferably 700 um or smaller.

The average secondary particle size is measured in conformity with JIS K 6891.

To achieve excellent handleability, the TFE-based polymer of the disclosure preferably has an apparent density of 0.40 g/mL or higher, more preferably 0.43 g/mL or higher, still more preferably 0.45 g/mL or higher. The upper limit is not limited, and may be 0.70 g/mL.

The apparent density is determined in conformity with JIS K 6892.

For example, the TFE-based polymer of the disclosure can suitably be produced by a method including step (A) of polymerizing tetrafluoroethylene (TFE) in an aqueous medium to obtain an aqueous dispersion containing a TFE-based polymer and the aqueous medium, step (B) of coagulating the aqueous dispersion solution after mixing to obtain a wet powder, and step (C) of drying the wet powder.

The aqueous dispersion in step (A) can suitably be produced by performing, in emulsion polymerization of the TFE and a modifying monomer, step (1a) of performing polymerization reaction in which the modifying monomer is fed into the reaction system in the initial stage of the polymerization reaction, and thereafter step (2a) of introducing a chain transfer agent and/or a modifying monomer into the reaction system.

This production method can easily produce an aqueous TFE-based polymer dispersion having an extrusion pressure at RR of 2500 of 100 MPa or lower described above. Moreover, the production method can easily produce a TFE-based polymer having a core-shell structure.

Examples of the modifying monomer in step (1a) include fluoro(alkyl vinyl ethers) such as perfluoro(alkyl vinyl ethers) (PAVE), vinyl heterocycles such as perfluoro-2,2-dimethyl-1,3-dioxol (PDD), and fluoroolefins such as hexafluoropropylene (HFP) and chlorotrifluoroethylene (CTFE). One or two or more of these may be used.

Of these, the modifying monomer is preferably at least one selected from the group consisting of fluoro(alkyl vinyl ethers) and fluoroolefins, more preferably at least one selected from the group consisting of PAVE, HFP, and CTFE, still more preferably at least one selected from the group consisting of PAVE and CTFE, further preferably CTFE.

The modifying monomer in step (1a) preferably includes a combination of PAVE and HFP.

The PAVE is preferably perfluoro(propyl vinyl ethers) (PPVE) .

The chain transfer agent in step (2a) may be any chain transfer agent that can reduce the molecular weight of the modified PTFE in the shell in the core-shell structure. Examples thereof include non-peroxide organic compounds such as water-soluble alcohols, hydrocarbons, and fluorinated hydrocarbons, water-soluble organic peroxides such as disuccinic acid peroxide (DSP), and persulfates such as ammonium persulfate (APS) and potassium persulfate (KPS) .

The chain transfer agent includes at least one of a non-peroxide organic compound, a water-soluble organic peroxide, or a persulfate.

The non-peroxide organic compound, the water-soluble organic peroxide, and the persulfate in the chain transfer agent may each be used alone or in combinations of two or more.

To allow the chain transfer agent to be better dispersed or uniform in the reaction system, the chain transfer agent preferably includes at least one selected from the group consisting of C1-C4 water-soluble alcohols, C1-C4 hydrocarbons, and C1-C4 fluorinated hydrocarbons, more preferably at least one selected from the group consisting of methane, ethane, n-butane, isobutane, methanol, HFC-134a, HFC-32, DSP, APS, and KPS, still more preferably includes at least one of methanol or isobutane, and particularly preferably includes methanol.

The modifying monomer in step (2a) is preferably at least one selected from the group consisting of fluoro(alkyl vinyl ethers) and fluoroolefins described above, more preferably at least one selected from the group consisting of PAVE, HEP, and CTFE, still more preferably at least one selected from the group consisting of HFP and CTFE, further preferably CTFE.

In step (2a), preferably the chain transfer agent and the modifying monomer are used in combination.

When CTFE is used as the modifying monomer in step (1a), CTFE is preferably used as the modifying monomer in step (2a).

When PAVE (and HFP) is used as the modifying monomer in step (1a), methanol (and HFP as the modifying monomer) is preferably used as the chain transfer agent in step (2a) .

The polymerization reaction in step (1a) is performed until the conversion rate of the TFE used in entire emulsion polymerization including step (1a) and step (2a) reaches 80% or higher, preferably 80 to 97%, still more preferably 85 to 95%.

Herein, the term "conversion rate" refers to a percentage of TFE consumed in a period from the start of the polymerization to a certain point of the polymerization in the amount of TFE corresponding to the amount of the target TFE unit.

The reaction conditions in the step (1a) and the step (1b) may be appropriately set according to the type of a modifier used, the composition and yield of the target TFE-based polymer, and the like.

The emulsion polymerization may be performed in an aqueous medium in the presence of an anionic fluorine-containing surfactant and a polymerization initiator. Other agents such as a dispersion stabilizer may be used as necessary.

The amount of the anionic fluorine-containing surfactant may be 0.02 to 0.3% by mass of the aqueous medium.

Examples of the polymerization initiator include persulfates such as ammonium persulfate (APS) and water-soluble organic peroxides such as disuccinic acid peroxide (DSP). Each of these polymerization initiators may be used alone or in combinations of two or more. APS, DSP, and the like are preferred among these because they have the action as a chain transfer agent described above.

The emulsion polymerization is preferably performed such that the amount of the polymerization initiator per 100 parts by mass of the aqueous medium is 0.0001 to 0.02 parts by mass.

Examples of the aqueous medium include those described above.

The emulsion polymerization can be performed at a polymerization temperature of 10°C to 95°C. When a persulfate or a water-soluble organic peroxide is used as a polymerization initiator, the emulsion polymerization is preferably performed at 60°C to 90°C.

The emulsion polymerization can be performed usually at 0.5 to 3.9 MPaG, preferably 0.6 to 3 MPaG.

The emulsion polymerization may be performed in a manner that the reaction is performed at a pressure of 0.5 MPaG or less in the initial stage of polymerization, particularly in the period where the conversion ratio of the TFE-based polymer in the whole is 15% or less, and is then continued while maintaining the pressure at more than 0.5 MPaG. Alternatively, the emulsion polymerization may be performed in a manner that the reaction pressure is reduced to, for example, 0.1 MPaG or less during formation of a core portion, then TFE is supplied again, and the reaction is continued at a certain pressure.

The mixing in the step (A) can be performed by a known method.

The coagulation in the step (B) can be performed by a known method.

In the step (C), the drying is typically performed by means such as vacuum, high frequency, or hot air, while the wet powder is kept in a state where it does not flow so much, preferably in a stationary state. Friction between powders, especially at high temperature generally has an unfavorable effect on a fine powder TFE-based polymer. This is because particles made of a TFE-based polymer of this type are easily fibrillated even by a small shearing force to lose their original stable particle structure.

The step (C) preferably includes placing the wet powder obtained in the step (B) in a container with air permeability on the bottom and/or sides and heating the powder at a temperature of 130°C to 300°C for two hours or longer. Such a heat treatment under extremely limited conditions as described above can efficiently remove the fluorine-containing compound having a molecular weight of 1000 or less together with water, thereby setting the amounts of the fluorine-containing compound and water within the above ranges.

To more efficiently remove water and the fluorine-containing compound, the temperature of the heat treatment in the step (C) is preferably 140°C or higher, more preferably 150°C or higher, still more preferably 160°C or higher, further more preferably 180°C or higher, still more preferably 200°C or higher, particularly preferably 220°C or higher, while preferably 280°C or lower, more preferably 250°C or lower.

To more efficiently remove water and the fluorine-containing compound, the duration of the heat treatment in the step (C) is preferably 5 hours or longer, more preferably 10 hours or longer, still more preferably 15 hours or longer. The upper limit is not limited. Still, it is preferably 100 hours, more preferably 50 hours, still more preferably 30 hours, for example.

To more efficiently remove water and the fluorine-containing compound, the wind speed in the step (C) is preferably 0.01 m/s or higher, more preferably 0.03 m/s or higher, still more preferably 0.05 m/s or higher, further more preferably 0.1 m/s or higher. To reduce or prevent powder scattering, the wind speed is preferably 50 m/s or lower, more preferably 30 m/s or lower, still more preferably 10 m/s or lower.

The heat treatment in the step (C) can be performed using an electric furnace or a steam furnace. For example, the heat treatment may be performed with an electric furnace such as a co-flow box electric furnace, a ventilated box electric furnace, a ventilated conveyor electric furnace, a band electric furnace, a radiant conveyor electric furnace, a fluidized bed electric furnace, a vacuum electric furnace, a stirring electric furnace, an convection electric furnace, or a hot air circulating electric furnace, or a steam furnace corresponding to any of the foregoing electric furnaces (a device of the type defined by replacing the "electric furnace" in the device name of the foregoing electric furnace with "steam furnace"). To more efficiently remove water and fluorine-containing compounds, preferred are a co-flow box electric furnace, a ventilated box electric furnace, a ventilated conveyor electric furnace, a band electric furnace, a fluidized bed electric furnace, a hot air circulating electric furnace, and steam furnaces corresponding to the forgoing furnaces (devices of the types determined by replacing the "electric furnace" in the device names of the foregoing electric furnaces with "steam furnace").

In the heat treatment in the step (C), to more efficiently remove water and the fluorine-containing compound, the wet powder is placed in a container with air permeability on the bottom and/or sides. The container with air permeability on the bottom and/or sides may be any container capable of withstanding the heat treatment temperature. Preferably, it is made of metal such as stainless steel.

The container with air permeability on the bottom and/or sides is preferably a tray (bat) having air permeability on the bottom and/or sides, more preferably a tray (mesh tray) having the bottom and/or sides made of mesh.

The mesh is preferably either a woven net or punched metal.

The opening of the mesh is preferably 2000 um or less (mesh No. 10 or higher (ASTM)), more preferably 595 um or less (mesh No. 30 or higher), still more preferably 297 um or less (mesh No. 50 or higher), further more preferably 177 um or less (mesh No. 80 or higher), even more preferably 149 um or less (mesh No. 100 or higher), particularly preferably 74 um or less (mesh No. 200 or higher). The opening is preferably 25 um or more (mesh No. 500 or lower).

When the mesh is a woven net, the woven net may be, for example, a plain-woven mesh, a twilled-woven mesh, a plain dutch-woven mesh, or a twilled dutch-woven mesh.

When the mesh is a punched metal, the porosity is preferably 10% or higher, more preferably 20% or higher, still more preferably 30% or higher. The porosity is preferably 95% or lower.

To more efficiently remove water and the fluorine-containing compound, the amount of the wet powder placed in the step (C) is preferably 10 g/cm² or less, more preferably 8 g/cm² or less, still more preferably 5 g/cm² or less, particularly preferably 3 g/cm² or less, while preferably 0.01 g/cm² or more, more preferably 0.05 g/cm² or more, still more preferably 0.1 g/cm² or more.

To more efficiently remove water and the fluorine-containing compound, the water content of the wet powder to be heated in the step (C) is preferably 10% by mass or higher, more preferably 20% by mass or higher, still more preferably 30% by mass or higher, while preferably 150% by mass or lower, more preferably 100% by mass or lower relative to the wet powder.

The TFE-based polymer of the disclosure is used in a binder for electrochemical devices. In the binder for electrochemical devices, the TFE-based polymer of the disclosure may be used alone or may be used as a mixture with other materials (for example, polymers other than the TFE-based polymer). The TFE-based polymer of the disclosure is preferably used substantially alone and is more preferably used alone. The expression "the TFE-based polymer of the disclosure is used substantially alone" means that the TFE-based polymer is used such that the amount of the TFE-based polymer in the binder for electrochemical devices falls within the range described later.

The disclosure also provides a binder for electrochemical devices consisting substantially only of a TFE-based polymer that has an extrusion pressure at a reduction ratio of 2500 of 100 MPa or lower and is substantially free from water.

The binder of the disclosure is less likely to form aggregates with powder components, such as electrode active materials and solid electrolytes, of electrochemical devices even if they are kneaded for a long time. It is homogenously mixable with the powder components. The binder can provide a mixture sheet having excellent strength and excellent flexibility.

The binder of the disclosure is substantially free from water; hence, it can reduce or prevent gas generation inside electrochemical device cells and deterioration of the properties of electrochemical devices (e.g., a reduction in capacity when stored at high temperature).

The binder of the disclosure does not require a large amount of a dispersion medium such as water or an organic solvent and can be combined with a wide range of electrode active materials and solid electrolytes. Thus, the binder is advantageous for production process. Moreover, the process and cost of using dispersion media can be reduced.

Further, since the binder of the disclosure has a high binding ability to active materials and electrolytes, the use amount thereof can be reduced.

Examples and preferred embodiments of the TFE-based polymer usable in the binder of the disclosure include those described above for the TFE-based polymer of the disclosure.

The binder of the disclosure consists substantially only of the TFE-based polymer, thereby significantly exerting the effect of the TFE-based polymer. The phrase "consists substantially only of the TFE-based polymer" means that the amount of the TFE-based polymer relative to the binder is 95% by mass or more.

The amount of the TFE-based polymer relative to the binder is preferably 98.0% by mass or more, more preferably 99.0% by mass or more, still more preferably 99.5% by mass or more, particularly preferably 99.9% by mass or more, most preferably 99.95% by mass or more.

The binder of the disclosure also preferably consists only of the TFE-based polymer.

The binder of the disclosure is substantially free from organic solvents, thereby reducing the process and cost of using organic solvents. The phrase "substantially free from organic solvents" means that the amount of organic solvents relative to the binder is 5% by mass or less.

The amount of the organic solvent is preferably 3% by mass or less, more preferably 1% by mass or less, still more preferably 0.1% by mass or less, further preferably 0.01% by mass or less, particularly preferably 0.001% by mass or less.

The binder of the disclosure is preferably in a powder form.

The binder of the disclosure is used in electrochemical devices such as batteries and capacitors.

Examples of batteries include secondary batteries such as lithium ion batteries.

The binder may be used in any capacitor. An electrochemical capacitor is preferred. Examples of electrochemical capacitors include electric double layer capacitors, hybrid capacitors, and redox capacitors. Examples of hybrid capacitors include sodium ion capacitors, lithium ion capacitors, and magnesium ion capacitors. Of these, electric double layer capacitors are particularly preferred.

The binder of the disclosure can be suitably used as a binder for batteries or a binder for capacitors and can be more suitably used as a binder for secondary batteries such as lithium ion batteries.

The binder of the disclosure may be used to produce battery components.

The binder of the disclosure may be particularly suitably used as a binder for electrodes.

The binder of the disclosure may also be suitably used as a binder in a solid electrolyte layer of a solid secondary battery.

The disclosure provides an electrode mixture including an electrode active material and the TFE-based polymer of the disclosure or the binder of the disclosure described above. Use of the electrode mixture of the disclosure can provide mixture sheets in which powder components in electrochemical devices are homogeneously dispersed and which have excellent strength and excellent flexibility. Even a small amount of the binder can hold electrode active materials. Thus, the electrode mixture can contain a larger amount of materials which improve the properties of electrochemical devices, such as active materials and conductive aids.

Examples of the electrode active material include a positive electrode active material and a negative electrode active material.

The positive electrode active material may be any material that can electrochemically occlude and release alkali metal ions. Still, the positive electrode material is preferably, for example, a material containing an alkali metal and at least one transition metal. Specific examples include alkali metal-containing transition metal composite oxides and alkali metal-containing transition metal phosphate compounds. Particularly preferred among these as the positive electrode material are alkali metal-containing transition metal composite oxides which produce high voltage. Examples of the alkali metal ions include lithium ions, sodium ions, and potassium ions. In a preferred embodiment, the alkali metal ions may be lithium ions. That is, in this embodiment, the alkali metal ion secondary battery is a lithium-ion secondary battery.

Examples of the alkali metal-containing transition metal composite oxide include:
alkali metal-manganese spinel composite oxides (e.g., lithium-manganese spinel composite oxides) represented by the formula: MₐM_{2-b}M^{1b}_{b}O₄ wherein M¹ includes at least one metal selected from the group consisting of Li, Na, and K; 0.9 ≤ a; 0 ≤ b ≤ 1.5; and M1 includes at least one metal selected from the group consisting of Fe, Co, Ni, Cu, Zn, Al, Sn, Cr, V, Ti, Mg, Ca, Sr, B, Ga, In, Si, and Ge;
alkali metal-nickel composite oxides (e.g., lithium-nickel composite oxides) represented by the formula: MNi_{1-c}M²_{c}O²₂ wherein M includes at least one metal selected from the group consisting of Li, Na, and K; 0 ≤ c ≤ 0.5; and M² includes at least one metal selected from the group consisting of Fe, Co, Mn, Cu, Zn, Al, Sn, Cr, V, Ti, Mg, Ca, Sr, B, Ga, In, Si, and Ge; and
alkali metal-cobalt composite oxides (e.g., lithium-cobalt composite oxides) represented by the formula: MCo_{1-d}M³_{d}O₃ wherein M includes at least one metal selected from the group consisting of Li, Na, and K; 0 ≤ d ≤ 0.5; and M³ includes at least one metal selected from the group consisting of Fe, Ni, Mn, Cu, Zn, Al, Sn, Cr, V, Ti, Mg, Ca, Sr, B, Ga, In, Si, and Ge.
In the above formulas, M is preferably a metal selected from the group consisting of Li, Na, and K, more preferably Li or Na, still more preferably Li.

To achieve high-energy-density, high-output secondary batteries, preferred among these are MCoO₂, MMnO₂, MNiO₃, MMn₂O₄, MNi_{0.8}Co_{0.15}Al_{0.05}O₂, and MNi_{1/3}Co_{1/3}Mn_{1/3}O₂, and preferred is a compound represented by the following formula (3):

MNiₕCoᵢMnⱼM⁵ₖO₂ (3)

wherein M includes at least one metal selected from the group consisting of Li, Na, and K; M⁵ includes at least one selected from the group consisting of Fe, Cu, Zn, Al, Sn, Cr, V, Ti, Mg, Ca, Sr, B, Ga, In, Si, and Ge; and (h + i + j + k) = 1.0, 0 ≤ h ≤ 1.0, 0 ≤ i ≤ 1.0, 0 ≤ j ≤ 1.5, and 0 ≤ k ≤ 0.2.

Examples of the alkali metal-containing transition metal phosphate compound include the following formula (4):

MₑM⁴_{f}(PO₄)_{g} (4)

wherein M includes at least one metal selected from the group consisting of Li, Na, and K; M⁴ includes at least one selected from the group consisting of V, Ti, Cr, Mn, Fe, Co, Ni, and Cu; and 0.5 ≤ e ≤ 3, 1 ≤ f ≤ 2, and 1 ≤ g ≤ 3.

In the above formulas, M is preferably a metal selected from the group consisting of Li, Na, and K, more preferably Li or Na, still more preferably Li. In other words, the alkali metal-containing transition metal phosphate compound is preferably a lithium-containing transition metal phosphate compound.

The transition metal of the lithium-containing transition metal phosphate compound is preferably V, Ti, Cr, Mn, Fe, Co, Ni, Cu, or the like. Specific examples thereof include iron phosphates such as LiFePO₄, Li₃Fe₂(PO₄)₃, and LiFeP₂O₇, cobalt phosphates such as LiCoPO₄, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphoric acid compound preferably has an olivine structure.

Examples of a different positive electrode active material include a lithium-nickel composite oxide. The lithium-nickel composite oxide is preferably a positive electrode material represented by the following formula (5) :

Li_{y}Ni₁₋ₓMₓO₂ (5)

wherein 0.01 ≤ x ≤ 0.7, 0.9 ≤ y ≤ 2.0, and M is a metal atom (other than Li and Ni).

Other examples of the positive electrode active material include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃. In particular, a positive electrode active material such as M₂MnO₃ or MNi_{0.5}Mn_{1.5}O₂ is preferred because the crystal structure thereof does not collapse even when the secondary battery is operated at a voltage exceeding 4.4 V or at a voltage of 4.6 V or higher. Thus, an electrochemical device such as a secondary battery including a positive electrode material containing any of the above-exemplified positive electrode active materials is preferred because the remaining capacity thereof is less likely to decrease and the percentage increase in resistance thereof is less likely to change even after storage at high temperature, and also the battery performance thereof may not be impaired even when the battery is driven at high voltage.

Other examples of the positive electrode active material also include solid solution materials of M₂MnO₃ and MM⁶O₂ (wherein M is at least one metal selected from the group consisting of Li, Na, and K; and M⁶ is a transition metal such as Co, Ni, Mn, or Fe).

Examples of the solid solution materials include alkali metal manganese oxides represented by the formula Mx[Mn_{(1-y)}M⁷_{y}]O_{z}. In the formula, M includes at least one metal selected from the group consisting of Li, Na, and K; and M⁷ includes at least one metal element other than M or Mn and contains, for example, one or more elements selected from the group consisting of Co, Ni, Fe, Ti, Mo, W, Cr, Zr, and Sn. The values of x, y, and z in the formula are within the ranges of 1 < x < 2, 0 ≤ y < 1, and 1.5 < z < 3, respectively. In particular, a manganese-containing solid solution material such as Li_{1.2}Mn_{0.5}Co_{0.14}Ni_{0.14}O₂, which is a Li₂MnO₃-based solid solution of LiNiO₂ and LiCoO₂, is preferred because it can provide an alkali metal ion secondary battery with a high energy density.

To improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more, relative to the sum of the amounts of the positive electrode active material and lithium phosphate. The upper limit thereof is preferably 10% by mass or less, more preferably 8% by mass or less, still more preferably 5% by mass or less.

To a surface of the positive electrode active material may be attached a substance having a composition different from the positive electrode active material. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

Such a substance may be attached to a surface of the positive electrode active material by, for example, a method of dissolving or suspending the substance in a solvent, impregnating the positive electrode active material with the solution or suspension, and drying the impregnated material; a method of dissolving or suspending a precursor of the substance in a solvent, impregnating the positive electrode active material with the solution or suspension, and heating the material and the precursor to cause a reaction therebetween; or a method of adding the substance to a precursor of the positive electrode active material and simultaneously sintering the materials. In the case of attaching carbon, for example, a carbonaceous material in the form of activated carbon may be mechanically attached to the surface afterward.

For the amount of the substance attached to the surface in terms of the mass relative to the amount of the positive electrode active material, the lower limit thereof is preferably 0.1 ppm or more, more preferably 1 ppm or more, still more preferably 10 ppm or more, while the upper limit thereof is preferably 20% or less, more preferably 10% or less, still more preferably 5% or less. The substance attached to the surface can reduce oxidation of the electrolyte on the surface of the positive electrode active material, improving the battery life. Too small an amount of the substance may fail to sufficiently provide this effect. Too large an amount thereof may hinder the entrance and exit of lithium ions, increasing the resistance.

Particles of the positive electrode active material may have any shape conventionally used, such as a bulky shape, a polyhedral shape, a spherical shape, an ellipsoidal shape, a plate shape, a needle shape, or a pillar shape. The primary particles may agglomerate to form secondary particles.

The positive electrode active material has a tap density of preferably 0.5 g/cm³ or higher, more preferably 0.8 g/cm³ or higher, still more preferably 1.0 g/cm³ or higher. The positive electrode active material having a tap density below the lower limit may increase the amount of a dispersion medium required and increase the amounts of a conductive material and a binder required in formation of the positive electrode active material layer and also limits the packing fraction of the positive electrode active material in the positive electrode active material layer, possibly limiting the battery capacity. The use of a composite oxide powder having a high tap density enables formation of a positive electrode active material layer with a high density. A higher tap density is normally preferred, and there is no upper limit. Still, too high a tap density may be a rate-determining factor of diffusion of lithium ions in the positive electrode active material layer with the electrolyte serving as a diffusion medium, possibly easily impairing the load characteristics. Thus, the upper limit of the tap density is preferably 4.0 g/cm³ or lower, more preferably 3.7 g/cm³ or lower, still more preferably 3.5 g/cm³ or lower.

The tap density is determined as a powder packing density (tap density) g/cm³ when 5 to 10 g of the positive electrode active material powder is packed into a 10-ml glass graduated cylinder, and the cylinder is tapped 200 times with a stroke of about 20 mm.

The particles of the positive electrode active material have a median size d50 (or a secondary particle size when the primary particles agglomerate to form secondary particles) of preferably 0.3 um or greater, more preferably 0.5 um or greater, still more preferably 0.8 um or greater, most preferably 1.0 um or greater, while preferably 30 um or smaller, more preferably 27 um or smaller, still more preferably 25 um or smaller, most preferably 22 um or smaller. The particles having a median size below the lower limit may fail to provide a product with a high tap density. The particles having a median size greater than the upper limit may cause prolonged diffusion of lithium in the particles, possibly impairing the battery performance. Mixing two or more positive electrode active materials having different median sizes d50 can further improve the easiness of packing in formation of the positive electrode.

The median size d50 is determined using a known laser diffraction/scattering particle size distribution analyzer. In the case of using LA-920 (Horiba, Ltd.) as the particle size distribution analyzer, the dispersion medium used in the measurement is a 0.1% by mass sodium hexametaphosphate aqueous solution, and the measurement refractive index is set to 1.24 after 5-minute ultrasonic dispersion.

When the primary particles agglomerate to form secondary particles, the average primary particle size of the positive electrode active material is preferably 0.05 um or greater, more preferably 0.1 um or greater, still more preferably 0.2 µm or greater. The upper limit thereof is preferably 5 um or smaller, more preferably 4 um or smaller, still more preferably 3 um or smaller, most preferably 2 um or smaller. The primary particles having an average primary particle size greater than the upper limit may have difficulty in forming spherical secondary particles, adversely affecting the powder packing. Further, such primary particles may have a greatly reduced specific surface area, highly possibly impairing the battery performance such as output characteristics. In contrast, the primary particles having an average primary particle size below the lower limit may usually be insufficiently-grown crystals, causing poor charge and discharge reversibility, for example.

The primary particle size is measured by scanning electron microscopic (SEM) observation. Specifically, the primary particle size is determined as follows. A photograph at a magnification of 10000x is first taken. Any 50 primary particles are selected and the maximum length between the left and right boundary lines of each primary particle is measured along the horizontal line. Then, the average value of the maximum lengths is calculated, which is defined as the primary particle size.

The positive electrode active material has a BET specific surface area of preferably 0.1 m²/g or larger, more preferably 0.2 m²/g or larger, still more preferably 0.3 m²/g or larger. The upper limit thereof is preferably 50 m²/g or smaller, more preferably 40 m²/g or smaller, still more preferably 30 m²/g or smaller. The positive electrode active material having a BET specific surface area smaller than the above range may easily impair the battery performance. The positive electrode active material having a BET specific surface area larger than the above range may less easily have an increased tap density, easily causing a difficulty in processing the material in formation of the positive electrode active material layer.

The BET specific surface area is defined by a value determined by single point BET nitrogen adsorption utilizing a gas flow method using a surface area analyzer (e.g., fully automatic surface area measurement device, Ohkura Riken Co., Ltd.), in which a sample is pre-dried in nitrogen stream at 150°C for 30 minutes, and a nitrogen-helium gas mixture with the nitrogen pressure relative to the atmospheric pressure is accurately adjusted to 0.3.

When the second battery of the disclosure is used as a large-size lithium-ion secondary battery for hybrid vehicles or distributed generation, it needs to achieve high output. Thus, the particles of the positive electrode active material preferably are mainly composed of secondary particles. The particles of the positive electrode active material preferably include 0.5 to 7.0% by volume of fine particles having an average secondary particle size of 40 um or smaller and having an average primary particle size of 1 um or smaller. The presence of fine particles having an average primary particle size of 1 um or smaller enlarges the contact area with the electrolyte solution and enables more rapid diffusion of lithium ions between the electrode mixture and the electrolytic solution, improving the output performance of the battery.

The positive electrode active material may be produced by any usual method of producing an inorganic compound. In particular, a spherical or ellipsoidal active material can be produced by various methods. For example, a material substance of transition metal is dissolved or crushed and dispersed in a solvent such as water, and the pH of the solution or dispersion is adjusted under stirring to form a spherical precursor. The precursor is recovered and, if necessary, dried. Then, a Li source such as LiOH, Li₂CO₃, or LiNO₃ is added thereto and the mixture is sintered at high temperature, thereby providing an active material.

In production of the positive electrode, one of the aforementioned positive electrode active materials may be used alone or two or more thereof having different compositions may be used in any combination at any ratio. Preferred examples of the combination in this case include a combination of LiCoO₂ with a ternary system such as LiNi_{0.33}Co_{0.33}Mn_{0.33}O₂, a combination of LiCoO₂ with either LiMn₂O₄ or LiMn₂O₄ in which one or more Mn atoms are replaced by a different transition metal, and a combination of LiFePO₄ with either LiCoO₂ or LiCoO₂ in which one or more Co atoms are replaced by a different transition metal.

To achieve a high battery capacity, the amount of the positive electrode active material is preferably 50 to 99.5% by mass, more preferably 80 to 99% by mass, of the positive electrode mixture. The amount of the positive electrode active material in the positive electrode active material layer is preferably 80% by mass or more, more preferably 82% by mass or more, particularly preferably 84% by mass or more. The upper limit thereof is preferably 99% by mass or less, more preferably 98% by mass or less. Too small an amount of the positive electrode active material in the positive electrode active material layer may lead to an insufficient electric capacity. In contrast, too large an amount thereof may lead to insufficient strength of the positive electrode.

The negative electrode active material is not limited, and may be, for example, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, or non-graphitizable carbon; a silicon-containing compound such as silicon or a silicon alloy; and Li₄Ti₅O₁₂, or a mixture of two or more of these. Of these, a material at least partially containing a carbonaceous material and/or a silicon-containing compound can be particularly suitably used.

A negative electrode active material used in the disclosure suitably contains silicon as a constitutional element. With a negative electrode active material containing silicon as a constitutional element, a high-capacity battery can be produced.

As a material containing silicon, silicon particles, particles having a structure where silicon fine particles are dispersed in a silicon-based compound, silicon oxide particles represented by the formula: SiOₓ (0.5 ≤ x ≤ 1.6), or a mixture of these is/are preferred. The use of any of these can provide a negative electrode mixture for lithium-ion secondary batteries with high initial charge-discharge efficiency, high capacity, and excellent cycle characteristics.

The term "silicon oxide" herein is a generic term for amorphous silicon oxides. Silicon oxides prior to disproportionation are represented by the formula: SiOₓ (0.5 ≤ x ≤ 1.6) where x preferably satisfies 0.8 ≤ x < 1.6, more preferably satisfies 0.8 ≤ x < 1.3. Such a silicon oxide can be obtained, for example, by heating a mixture of silicon dioxide and metallic silicon to generate silicon monoxide gas, followed by cooling the silicon monoxide gas for deposition.

The particles having a structure where silicon fine particles are dispersed in a silicon-based compound can be obtained, for example, by a method including sintering a mixture of silicon fine particles and a silicon-based compound or by a disproportionation reaction in which silicon oxide particles (SiOₓ) prior to disproportionation are heated in an inert non-oxidizing atmosphere such as an argon atmosphere at a temperature of 400°C or higher, suitably 800°C to 1100°C. The material obtained by the latter method is particularly suitable as silicon fine crystals are uniformly dispersed. Through the above disproportionation reaction, silicon nanoparticles can have a size of 1 to 100 nm. The silicon oxide in the particles having a structure where silicon nanoparticles are dispersed in a silicon-based compound is desirably silicon dioxide. Dispersion of silicon nanoparticles (crystals) in an amorphous silicon oxide can be confirmed by transmission electron microscopy.

The physical properties of the silicon-containing particles can be appropriately determined according to the aimed composite particles. For example, the average particle size is preferably 0.1 to 50 um. The lower limit is more preferably 0.2 um or greater, still more preferably 0.5 µm or greater. The upper limit is more preferably 30 um or smaller, still more preferably 20 um or smaller. The average particle size is expressed as a weight average particle size determined by particle size distribution measurement by a laser diffraction method.

The BET specific surface area is preferably 0.5 to 100 m²/g, more preferably 1 to 20 m²/g. With the BET specific surface area of 0.5 m²/g or larger, there is no risk of a reduction in the adhesiveness of the negative electrode material when applied to the electrode and impairment of the battery characteristics. A BET specific surface area of 100 m²/g or less can increase the proportion of silicon dioxide on the particle surface, which eliminates the risk of battery capacity reduction when using the silicon fine particles as a negative electrode material for a lithium-ion secondary battery.

The silicon-containing particles are provided with conductivity when coated with carbon, which improves the battery characteristics. Examples of the method for imparting conductivity include a method including mixing the silicon-containing particles with conductive particles such as graphite particles, a method including coating the silicon-containing particle surface with a carbon film, and a method combining these two methods. Preferred is a method including coating with a carbon film, and more preferred is a method including chemical vapor deposition (CVD) .

To increase the capacity of the resulting electrode mixture, the amount of the negative electrode active material in the electrode mixture is preferably 40% by mass or more, more preferably 50% by mass or more, particularly preferably 60% by mass or more. The upper limit thereof is preferably 99% by mass or less, more preferably 98% by mass or less.

The electrode mixture of the disclosure preferably further contains a conductive aid.

The conductive aid used may be any known conductive material. Specific examples thereof include metal materials such as copper and nickel, and carbon materials such as graphite, including natural graphite and artificial graphite, carbon black, including acetylene black, Ketjen black, channel black, furnace black, lamp black, and thermal black, and amorphous carbon, including needle coke, carbon nanotube, fullerene, and VGCF. One of these materials may be used alone or two or more thereof may be used in any combination at any ratio.

The conductive aid is used in an amount of usually 0.01% by mass or more, preferably 0.1% by mass or more, more preferably 1% by mass or more, while usually 50% by mass or less, preferably 30% by mass or less, more preferably 15% by mass or less, in the electrode mixture. The conductive aid in an amount less than the above range may cause insufficient conductivity. In contrast, the conductive aid in an amount more than the above range may cause a low battery capacity.

The electrode mixture of the disclosure may further include a thermoplastic resin. Examples of the thermoplastic resin include polyvinylidene fluoride, polypropylene, polyethylene, polystyrene, polyethylene terephthalate, and polyethylene oxide. Each of these may be used alone, or two or more of these may be used in any combination at any ratio.

The proportion of the thermoplastic resin relative to the electrode active material is usually 0.01% by mass or more, preferably 0.05% by mass or more, more preferably 0.10% by mass or more, while usually 3.0% by mass or less, preferably 2.5% by mass or less, more preferably 2.0% by mass or less. The thermoplastic resin added can improve the mechanical strength of the electrode. The thermoplastic resin added in excess of the above range may lower the proportion of the electrode active material in the electrode mixture, resulting in a low capacity of the battery and high resistance between the active materials.

In the electrode mixture of the disclosure, the amount of the binder relative to the electrode mixture may be 0.1% by mass or more and is preferably 0.2% by mass or more, still more preferably 0.5% by mass or more. The amount may be 50% by mass or less and is preferably 40% by mass or less, more preferably 30% by mass or less, still more preferably 10% by mass or less, particularly preferably 5% by mass or less, most preferably 3% by mass or less. With too low the percentage of the binder, electrode mixture active materials cannot be sufficiently held, so that an electrode mixture sheet has an insufficient mechanical strength. Thus, the battery performance such as cycle performance may be impaired. Too high a percentage of the binder may reduce the battery capacity and conductivity. Since the binder of the disclosure has a high binding force, even a small amount of the binder can sufficiently hold electrode active materials.

In the electrode mixture of the disclosure, the binder component preferably consists substantially only of the TFE-based polymer, more preferably consists only of the TFE-based polymer. The expression "the binder component preferably consists substantially only of the TFE-based polymer" means that the amount of the TFE-based polymer in the binder component constituting the electrode mixture is 95.0% by mass or more relative to the binder component. The amount of the TFE-based polymer is preferably 98. 0% by mass or more, more preferably 99.0% by mass or more, still more preferably 99.5% by mass or more, particularly preferably 99.9% by mass or more, most preferably 99.95% by mass or more, relative to the binder component.

The electrode mixture of the disclosure is preferably in a sheet form.

The electrode mixture of the disclosure can suitably be used as an electrode mixture for secondary batteries. In particular, the electrode mixture is suitable for lithium-ion secondary batteries. The electrode mixture of the disclosure, when used for secondary batteries, is commonly used in the form of sheet.

The electrochemical mixture sheet preferably has a thickness of 300 um or smaller, more preferably 250 um or smaller, still more preferably 200 um or smaller, further more preferably 180 um or smaller, particularly preferably 150 um or smaller, while preferably 10 um or greater, more preferably 15 um or greater, still more preferably 20 um or greater.

An exemplary specific method of producing an electrode mixture sheet including an electrode mixture is described below. The electrode mixture sheet can be obtained by a production method including: (1) mixing a raw material composition containing an electrode active material and a binder, and, if necessary, a conductive aid; (2) molding the raw material composition obtained in the step (1) into a bulky shape; and (3) rolling the bulky raw material composition obtained in the step (2) into a sheet.

The raw material composition mixed in the step (1) is in a state where materials such as the electrode active material and the binder are simply mixed, and does not have a fixed shape. Specific examples of mixing methods include mixing with the use of a W-shaped mixer, a V-shaped mixer, a drum mixer, a ribbon mixer, a conical screw mixer, a single screw kneader, a twin-screw kneader, a mix muller, a stirring mixer, or a planetary mixer.

For the binder mixing conditions in the step (1), the number of rotations is preferably 3000 rpm or less. The number of rotations is preferably 10 rpm or more, more preferably 15 rpm or more, still more preferably 20 rpm or more, while preferably 2000 rpm or less, more preferably 1500 rpm or less, still more preferably 1000 rpm or less. At the number of rotations below this range, mixing may take a long time, affecting the productivity. A number of rotations above the range may cause excessive fibrillation, possibly resulting in an electrode mixture sheet having poor strength and poor flexibility.

Forming into a bulky raw material composition in the step (2) means forming the raw material composition into a single mass. Specific examples of methods of forming into a bulky shape include extrusion molding and press molding. The term "bulky" does not specify the shape and means any state of single mass, including a rod shape, a sheet shape, a spherical shape, a cubic shape, and the like.

A specific example of the rolling method in the step (3) is a method of rolling the bulky raw material composition using, for example, a roller press, a flat plate press, or a calender roller.

The step (3) is also preferably followed by a step (4) of applying a larger load to the resulting rolled sheet to form a thinner sheet-shaped product. Repeating the step (4) is also preferred. As described, better flexibility is achieved not by thinning the rolled sheet in one time but by rolling the sheet in steps. The number of performing the step (4) is preferably twice or more and 10 times or less, more preferably three times or more and nine times or less. A specific example of a rolling method is a method of rotating two or a plurality of rollers and passing the rolled sheet therebetween to provide a thinner sheet-shaped product.

To control the fibril diameter, the step (3) or the step (4) is also preferably followed by a step (5) of coarsely crushing the rolled sheet, again forming the coarsely crushed product into a bulky product, and then rolling the bulky product into a sheet-shaped product. Repeating the step (5) is also preferred. The number of performing the step (5) is preferably once or more and 12 times or less, more preferably twice or more and 11 times or less.

Specific examples of coarsely crushing the rolled sheet and again forming the coarsely crushed product into a bulky product in the step (5) include a method of folding the sheet, a method of forming the sheet into a rod- or a thin sheet-shaped product, and a method of forming the sheet into chips. The term "coarsely crushing" herein means changing the form of the rolled sheet obtained in the step (3) or step (4) into a different form so as to roll the product into a sheet-shaped product in the subsequent step, and encompasses simply folding the rolled sheet.

The step (5) may be followed by the step (4), or may be repeated. In any of the steps (2), (3), (4), and (5), uniaxial stretching or biaxial stretching may be performed. The fibril diameter can also be adjusted according to the degree of coarse crushing in the step (5).

In the step (3), (4), or (5), the rolling percentage is preferably 100 or higher, more preferably 20% or higher, while preferably 80% or lower, more preferably 65% or lower, still more preferably 500 or lower. A rolling percentage below this range may increase the number of rolling operations and the duration, affecting the productivity. A rolling percentage above the range may cause excessive fibrillation, possibly resulting in an electrode mixture sheet having poor strength and poor flexibility. The rolling percentage herein refers to a reduction ratio in the thickness of a sample after rolling processing relative to the thickness before the processing. The sample before rolling may be a bulky raw material composition or may be a sheet-shaped raw material composition. The thickness of a sample refers to the thickness in the direction along which a load is applied during rolling.

The electrode mixture sheet can be suitably produced also by a production method including:
(a) mixing a powder component and a binder to provide an electrode mixture; and
(b) calendaring or extrusion-molding the electrode mixture into a sheet,
wherein the mixing in the step (a) includes:
(al) homogenizing the powder component and the binder into powder; and
(a2) mixing the material powder mixture obtained in the step (al) to provide the electrode mixture.

For example, PTFE has two transition temperatures at about 19°C and about 30°C. At lower than 19°C, PTFE can be easily mixed while maintaining its shape. In contrast, at higher than 19°C, the PTFE particulate structure loosens and becomes more sensitive to mechanical shearing. At temperatures higher than 30°C, more significant fibrillation occurs.

Therefore, the homogenizing in the step (al) is preferably performed at 19°C or lower, preferably at a temperature of 0°C to 19°C.

In other words, such a step (al) is preferably performed such that the materials are mixed and thereby homogenized while reducing fibrillation.

The mixing in the subsequent step (a2) is preferably performed at a temperature of 30°C or higher to promote fibrillation.

The step (a2) is preferably performed at 30°C to 150°C, more preferably 35°C to 120°C, still more preferably 40°C to 80°C.

In an embodiment, the calendering or extrusion molding in the step (b) is performed at a temperature of 30°C to 150°C, preferably 35°C to 120°C, more preferably 40°C to 100°C.

The mixing in the step (a) is preferably performed with shearing force applied.

Specific examples of mixing methods include mixing with the use of a W-shaped mixer, a V-shaped mixer, a drum mixer, a ribbon mixer, a conical screw mixer, a single screw kneader, a twin-screw kneader, a mix muller, a stirring mixer, a planetary mixer, a Henschel mixer, or a rapid mixer.

For the mixing conditions, the number of rotations and the mixing duration are set as appropriate. For example, the number of rotations is suitably 15000 rpm or less. The number of rotations is preferably 10 rpm or more, more preferably 50 rpm or more, still more preferably 100 rpm or more, while preferably 12000 rpm or less, more preferably 10000 rpm or less, still more preferably 8000 rpm or less. At the number of rotations below this range, mixing may take a long time, affecting the productivity. At the number of rotations above this range, fibrillation may excessively proceed, resulting in an electrode mixture sheet having poor strength.

The step (al) is preferably performed at a weaker shearing force than that in the step (a2).

The step (al) is preferably performed for a shorter time than that in the step (a2).

In the step (a2), the raw material composition preferably contains no liquid solvent, but a small amount of lubricant may be used. In other words, a lubricant may be added to the powdery raw material mixture obtained in the step (al) to prepare a paste.

Examples of the lubricant include, but are not limited to, water, ether compounds, alcohols, ionic liquids, carbonates, aliphatic hydrocarbons (e.g., low polar solvents such as heptane and xylene), isoparaffinic hydrocarbon compounds, and petroleum distillates (e.g., gasoline (C4-C10), naphtha (C4-C11), kerosene/paraffin (C10-C16), and mixtures of any of these).

The lubricant has a water content of preferably 1000 ppm or less.

A water content of 1000 ppm or less is preferred to reduce deterioration of electrochemical devices. The water content is more preferably 500 ppm or less.

The lubricant, when used, is particularly preferably a low polar solvent such as butyl butyrate or an ether compound.

The amount of the lubricant, when used, is 5.0 to 35.0 parts by weight, preferably 10.0 to 30.0 parts by weight, more preferably 15.0 to 25.0 parts by weight relative to the total weight of the composition subjected to the step (al).

The raw material composition preferably contains substantially no liquid solvent. In a conventional method for producing an electrode mixture, typically, a solvent containing a binder dissolved therein is used to prepare slurry containing an electrode mixture component in the form of powder dispersed therein, and the slurry is applied and dried to produce an electrode mixture sheet. In this case, a solvent to disperse or dissolve a binder is used. Yet, solvents that can dissolve a binder resin conventionally used in general are limited to specific solvents such as N-methyl pyrrolidone. Since such a solvent is highly polar and the use thereof requires a drying step, the use of the solvent leads to additional steps and cost. These solvents react with an electrolyte such as an electrolyte solution and a solid electrolyte to deteriorate the electrolyte and may cause poor battery performance due to residual components in preparation of slurry or after drying. In addition, since low polar solvents such as heptane can dissolve very limited types of binder resin and have a low flash point, handling of such low polar solvents may be complicated.

Not using a solvent but using a powdery binder having a low water content in forming an electrode mixture sheet can provide a battery in which the electrolyte is less likely to be deteriorated. The above production method can provide an electrode mixture sheet containing a binder having a fine fibrous structure and can reduce a burden on the production process owing to elimination of slurry production.

The step (b) includes calendering or extrusion. The calendering and extrusion can be performed by known methods. Through this step, the electrode mixture can be molded into a sheet.

The step (b) preferably includes (b1) forming the electrode mixture obtained in the step (a) into a bulky product and (b2) calendering or extrusion-molding the bulky product.

Forming into a bulky product means forming the electrode mixture into a single mass.

Specific examples of methods of forming into a bulky shape include extrusion molding and press molding.

The term "bulky" does not specify the shape and means any state of single mass, including a rod shape, a sheet shape, a spherical shape, a cubic shape, and the like. The size of the mass is preferably such that the diameter or minimum side of the cross section is 10000 pm or greater, more preferably 20000 pm or greater.

A specific example of the calendering or extrusion molding in the step (b2) is a method of rolling the electrode mixture using a roller press or a calender roller.

The step (b) is preferably performed at 30°C to 150°C. As described above, PTFE has a glass transition temperature around 30°C and is thus easily fibrillated at 30°C or higher. Therefore, the step (b) is preferably performed at such temperatures.

The calendering or extrusion molding applies a shearing force, which fibrillates the PTFE and gives the shape.

The step (b) may be preferably followed by a step (c) of applying a larger load on the resulting rolled sheet to form a thinner sheet-shaped product. Repeating the step (c) is also preferred. As described, better flexibility is achieved not by thinning the rolled sheet in one time but by rolling the sheet in steps.

The number of performing the step (c) is preferably twice or more and 10 times or less, more preferably three times or more and nine times or less.
A specific example of a rolling method is a method of rotating two or a plurality of rollers and passing the rolled sheet therebetween to provide a thinner sheet-shaped product.

To control the sheet strength, the step (b) or the step (c) is also preferably followed by a step (d) of coarsely crushing the rolled sheet, again forming the coarsely crushed product into a bulky product, and then rolling the bulky product into a sheet-shaped product. Repeating the step (d) is also preferred. The number of performing the step (d) is preferably once or more and 12 times or less, more preferably twice or more and 11 times or less.

Specific examples of coarsely crushing the rolled sheet and again forming the coarsely crushed product into a bulky product in the step (d) include a method of folding the rolled sheet, a method of forming the rolled sheet into a rod- or a thin sheet-shaped product, and a method of forming the rolled sheet into chips. The term "coarsely crushing" herein means changing the form of the rolled sheet obtained in the step (b) or step (c) into a different form so as to roll the product into a sheet-shaped product in the subsequent step, and encompasses simply folding the rolled sheet.

The step (d) may be followed by the step (c) or may be repeated.

In any of the steps (a), (b), (c), and (d), uniaxial stretching or biaxial stretching may be performed.

The sheet strength can also be adjusted according to the degree of coarse crushing in the step (d).

In the step (b), (c), or (d), the rolling percentage is preferably 100 or higher, more preferably 20% or higher, while preferably 80% or lower, more preferably 65% or lower, still more preferably 500 or lower. A rolling percentage below this range may increase the number of rolling operations and the duration, affecting the productivity. A rolling percentage above the range may cause excessive fibrillation, resulting in an electrode mixture sheet having poor strength and poor flexibility.

The rolling percentage herein refers to a reduction ratio in the thickness of a sample after rolling processing relative to that before the processing. The sample before rolling may be a bulky material composition or may be a sheet-shaped material composition. The thickness of a sample refers to the thickness in the direction along which a load is applied during rolling.

The steps (c) and (d) are preferably performed at 30°C or higher, more preferably 60°C or higher. The steps (c) and (d) are preferably performed at 150°C or lower.

The electrode mixture sheet may be used as an electrode mixture sheet for secondary batteries. The electrode mixture sheet may be for either a negative electrode or a positive electrode. In particular, the electrode mixture sheet is suitable for lithium-ion secondary batteries.

The disclosure also provides an electrode including the TFE-based polymer or the binder of the disclosure, an electrode active material, and a current collector. In the electrode of the disclosure, powder components in electrochemical devices are homogeneously dispersed. Thus, the electrode has excellent strength and excellent flexibility. Even a small amount of the binder can hold electrode active materials. Thus, the electrode can contain a larger amount of materials which improve the properties of electrochemical devices, such as active materials and conductive aids.

The electrode of the disclosure may include the above-described electrode mixture of the disclosure (preferably electrode mixture sheet) and a current collector.

The electrode of the disclosure may be either a positive electrode or a negative electrode.

The positive electrode is preferably composed of a current collector and an electrode mixture sheet containing the positive electrode active material. Examples of the material of the current collector for a positive electrode include metal materials including metals such as aluminum, titanium, tantalum, stainless steel, nickel, and alloys of these metals; and carbon materials such as carbon cloth and carbon paper. Preferred is any metal material, especially aluminum or an alloy thereof.

In the case of a metal material, the current collector may be in the form of metal foil, metal cylinder, metal coil, metal plate, expanded metal, punched metal, metal foam, or the like. In the case of a carbon material, the current collector may be in the form of carbon plate, carbon thin film, carbon cylinder, or the like. Preferred among these is metal foil. The metal foil may be in the form of mesh, as appropriate. The metal foil may have any thickness, and the thickness is usually 1 pm or greater, preferably 3 pm or greater, more preferably 5 pm or greater, while usually 1 mm or smaller, preferably 100 pm or smaller, more preferably 50 pm or smaller. The metal foil having a thickness smaller than this range may have insufficient strength as a current collector. Conversely, the metal foil having a thickness greater than the above range may have poor handleability.

To reduce the electric contact resistance between the current collector and the positive electrode active material layer, the current collector also preferably has a conductive aid applied on the surface thereof. Examples of the conductive aid include carbon and noble metals such as gold, platinum, and silver.

The positive electrode may be produced by a usual method. In an exemplary method, the electrode mixture sheet and the current collector are laminated via an adhesive, followed by vacuum drying.

The density of the positive electrode mixture sheet is preferably 2.80 g/cm³ or higher, more preferably 3.00 g/cm³ or higher, still more preferably 3.20 g/cm³ or higher, while preferably 3.80 g/cm³ or lower, more preferably 3.75 g/cm³ or lower, still more preferably 3.70 g/cm³ or lower. Cracks may tend to occur in the positive electrode mixture sheet having a density higher than the above range. The positive electrode mixture sheet having a density lower than the above range may reduce the conductivity between the active materials and increase the battery resistance, failing to provide high output.

The positive electrode may have any thickness. To achieve a high capacity and high output, the lower limit of the thickness of the mixture layer on one side of the current collector excluding the thickness of the metal foil of the current collector is preferably 10 pm or greater, more preferably 20 pm or greater, while preferably 500 pm or smaller, more preferably 450 pm or smaller.

The negative electrode is preferably composed of a current collector and an electrode mixture sheet containing the negative electrode active material. Examples of the material of the current collector for a negative electrode include metal materials including metals such as copper, nickel, titanium, tantalum, stainless steel, and alloys of these metals; and carbon materials such as carbon cloth and carbon paper. Preferred is any metal material, especially copper, nickel, or an alloy thereof.

In the case of a metal material, the current collector may be in the form of metal foil, metal cylinder, metal coil, metal plate, expanded metal, punched metal, metal foam, or the like. In the case of a carbon material, the current collector may be in the form of carbon plate, carbon thin film, carbon cylinder, or the like. Preferred among these is metal foil. The metal foil may be in the form of mesh, as appropriate. The metal foil may have any thickness, and the thickness is usually 1 pm or greater, preferably 3 pm or greater, more preferably 5 pm or greater, while usually 1 mm or smaller, preferably 100 pm or smaller, more preferably 50 pm or smaller. The metal foil having a thickness smaller than this range may have insufficient strength as a current collector. Conversely, the metal foil having a thickness greater than the above range may have poor handleability.

The negative electrode may be produced by a usual method. In an exemplary method, the electrode mixture sheet and the current collector are laminated via an adhesive, followed by vacuum drying.

The density of the negative electrode mixture is preferably 1.3 g/cm³ or higher, more preferably 1.4 g/cm³ or higher, still more preferably 1.5 g/cm³ or higher, while preferably 2.0 g/cm³ or lower, more preferably 1.9 g/cm³ or lower, still more preferably 1.8 g/cm³ or lower. Cracks may tend to occur in the negative electrode mixture sheet having a density higher than the above range. The negative electrode mixture sheet having a density lower than the above range may reduce the conductivity between the active materials and increase the battery resistance, failing to provide high output.

The negative electrode may have any thickness. To achieve a high capacity and high output, the lower limit of the thickness of the mixture layer on one side of the current collector excluding the thickness of the metal foil of the current collector is preferably 10 pm or greater, more preferably 20 pm or greater, while preferably 500 pm or smaller, more preferably 450 pm or smaller.

The disclosure also provides a secondary battery including the electrode of the disclosure described above.

The secondary battery of the disclosure may be a secondary battery obtainable by use of an electrolyte solution or may be a solid-state secondary battery.

The solid-state secondary battery herein is a secondary battery containing a solid electrolyte. It may be a semi-solid-state secondary battery containing, as an electrolyte, a solid electrolyte and a liquid component, or an all-solid-state secondary battery containing a solid electrolyte alone as an electrolyte.

The secondary battery obtainable by use of an electrolyte solution may be obtained by use of components used for a known secondary battery, such as an electrolyte solution and a separator. These will be explained in detail below.

A non-aqueous electrolyte solution is preferably used as the electrolyte solution. The nonaqueous electrolyte solution used may be a solution obtained by dissolving a known electrolyte salt in a known organic solvent for dissolving electrolyte salts.

Any organic solvent for dissolving electrolyte salts may be used. One or more of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate can be used.

Examples of electrolyte salts include LiClO₄, LiAsF₆, LiBF₄, LiPF₆, LiN(SO₂CF₃)₂, and LiN(SO₂C₂F₅)₂. To achieve favorable cycle characteristics, particularly preferred are LiPF₆, LiBF₄, LiN(SO₂CF₃)₂, LiN(SO₂C₂F₅)₂, and a combination of any of these.

The concentration of the electrolyte salt is preferably 0.8 mol/L or higher, more preferably 1.0 mol/L or higher. The upper limit is usually 1.5 mol/L, though it depends on the organic solvent for dissolving electrolyte salts used.

The secondary battery obtainable by use of an electrolyte solution preferably further includes a separator. The separator may be formed from any known material and may have any known shape as long as the resulting separator is stable to the electrolyte solution and is excellent in a liquid-retaining ability. The separator is preferably in the form of a porous sheet or a nonwoven fabric which is formed from a material stable to the electrolyte solution, such as resin, glass fiber, or inorganic matter, and which has an excellent liquid-retaining ability.

Examples of the material of a resin or glass-fiber separator include polyolefins such as polyethylene and polypropylene, aromatic polyamide, polytetrafluoroethylene, polyether sulfone, and glass filters. One of these materials may be used alone or two or more thereof may be used in any combination at any ratio, for example, in the form of a polypropylene/polyethylene bilayer film or a polypropylene/polyethylene/polypropylene trilayer film. To achieve good permeability of the electrolyte solution and a good shut-down effect, the separator is preferably a porous sheet or nonwoven fabric formed from a polyolefin such as polyethylene or polypropylene.

The separator may have any thickness, and the thickness is usually 1 pm or greater, preferably 5 pm or greater, more preferably 8 pm or greater, while usually 50 pm or smaller, preferably 40 pm or smaller, more preferably 30 pm or smaller. The separator thinner than the above range may have poor insulation and mechanical strength. The separator thicker than the above range may not only reduce battery performance such as poor rate characteristics but also reduce energy density of the whole electrolyte battery.

Examples of the inorganic matter include oxides such as alumina and silicon dioxide, nitrides such as aluminum nitride and silicon nitride, and sulfates such as barium sulfate and calcium sulfate, each in the form of particles or fibers.

The separator is in the form of a thin film such as a nonwoven fabric, a woven fabric, or a microporous film. The thin film favorably has a pore size of 0.01 to 1 pm and a thickness of 5 to 50 um. Instead of the above separate thin film, the separator may have a structure in which a composite porous layer containing particles of the above inorganic matter is disposed on a surface of one or both of the positive and negative electrodes using a resin binder. For example, alumina particles having a 90% particle size of smaller than 1 pm may be applied to the respective surfaces of the positive electrode using fluororesin as a binder, thereby forming a porous layer.

The external case may be made of any material that is stable to an electrolyte to be used. Specific examples thereof include metals such as nickel-plated steel plates, stainless steel, aluminum and aluminum alloys, and magnesium alloys, and a layered film (laminate film) of resin and aluminum foil. To reduce the weight, a metal such as aluminum or an aluminum alloy or a laminate film is favorably used.

An external case made of metal may have a sealed-up structure formed by welding the metal by laser welding, resistance welding, or ultrasonic welding, or a caulking structure using the metal with a resin gasket in between. An external case made of a laminate film may have a sealed-up structure formed by hot-melting resin layers. To improve the sealability, a resin which is different from the resin of the laminate film may be disposed between the resin layers. Especially, in the case of forming a sealed-up structure by hot-melting the resin layers with current collecting terminals in between, metal and resin are to be bonded. Thus, the resin to be disposed between the resin layers is suitably a resin having a polar group or a modified resin having a polar group introduced therein.

The lithium-ion secondary battery obtainable by use of an electrolyte solution may have any shape, such as a cylindrical shape, a square shape, a laminate shape, a coin shape, or a large-size shape. The shapes and the structures of the positive electrode, the negative electrode, and the separator may be changed according to the shape of the battery.

The solid-state secondary battery is preferably an all-solid-state secondary battery. The solid-state secondary battery is preferably a lithium ion battery or is preferably a sulfide-based all-solid-state secondary battery.

The solid-state secondary battery preferably includes a positive electrode, a negative electrode, and a solid electrolyte layer between the positive electrode and the negative electrode.
In the solid-state secondary battery, the binder of the disclosure may be used for an electrode layer or a solid electrolyte layer.

According to a preferred embodiment of the disclosure, the disclosure relates to a solid-state secondary battery mixture (preferably a mixture sheet) containing the binder of the disclosure and a solid electrolyte and a solid electrolyte layer (preferably a solid electrolyte layer sheet) containing the binder of the disclosure and a solid electrolyte.

The solid electrolyte used in the solid-state secondary battery mixture may be a sulfide-based solid electrolyte or an oxide-based solid electrolyte. In particular, when a sulfide-based solid electrolyte is used, the solid-state secondary battery mixture is advantageously flexible.

The sulfide-based solid electrolyte is not limited. The sulfide-based solid electrolyte used may be any one selected from Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (X = 0.6 to 0.8), Li_{4+y}Ge_{1-y}Ga_{y}S₄ (y = 0.2 to 0.3), LiPSCl, LiCl, Li_{7-x-2y}PS_{6-x-y}Clₓ (0.8 ≤ x ≤ 1.7, 0 < y ≤ -0.25x + 0.5), and Li₁₀SnP₂S₁₂, or a mixture of two or more thereof.

The sulfide-based solid electrolyte preferably contains lithium. Sulfide-based solid electrolytes containing lithium are used in solid-state batteries in which lithium ions are used as carriers, and are particularly preferred in that they provide electrochemical devices having high energy density.

The oxide-based solid electrolyte is preferably a compound that contains an oxygen atom (0), has conductivity of metal ions belonging to Group 1 or Group 2 of the periodic table, and has electronic insulating properties.

Specific examples of the compound include LiₓₐLa_{ya}TiO₃ (xa = 0.3 to 0.7, ya = 0.3 to 0.7) (LLT), Li_{xb}La_{yb}Zr_{zb}M^{bb}_{mb}O_{nb} (wherein M^{bb} includes at least one element selected from Al, Mg, Ca, Sr, V, Nb, Ta, Ti, Ge, In, and Sn; xb satisfies 5 ≤ xb ≤ 10; yb satisfies 1 ≤ yb ≤ 4; zb satisfies 1 ≤ zb ≤ 4; mb satisfies 0 ≤ mb ≤ 2; and nb satisfies 5 ≤ nb ≤ 20), Li_{xc}B_{yc}M^{cc}_{zc}O_{nc} (wherein M^{cc} includes at least one element selected from C. S, Al, Si, Ga, Ge, In, and Sn; xc satisfies 0 ≤ xc ≤ 5; yc satisfies 0 ≤ yc ≤ 1; zc satisfies 0 ≤ zc ≤ 1; and nc satisfies 0 ≤ nc ≤ 6), Li_{xd}(Al,Ga)_{yd}(Ti,Ge)_{zd}Si_{ad}P_{md}O_{nd} (1 ≤ xd ≤ 3, 0 ≤ yd ≤ 2, 0 ≤ zd ≤ 2, 0 ≤ ad ≤ 2, 1 ≤ md ≤ 7, and 3 ≤ nd ≤ 15), Li₍₃₋₂ₓₑ₎M^{ee}ₓₑD^{ee}O (wherein xe is a number of 0 or greater and 0.1 or smaller, M^{ee} is a divalent metal atom, D^{ee} is a halogen atom or a combination of two or more halogen atoms), Li_{xf}Si_{yf}O_{zf} (1 ≤ xf ≤ 5, 0 < yf ≤ 3, and 1 ≤ zf ≤ 10), Li_{xg}S_{yg}O_{zg} (1 ≤ xg ≤ 3, 0 < yg ≤ 2, and 1 ≤ zg ≤ 10), Li₃BO₃-Li₂SO₄, Li₂O-B₂O₃-P₂O₃, Li₂O-SiO₂, Li₆BaLa₂Ta₂O₂₂, Li₃PO_{(4-3/2w)}N_{w} (w < 1), Li_{3.5}Zn_{0.25}GeO₄ having a lithium super ionic conductor (LISICON) crystal structure, La_{0.51}Li_{0.34}TiO_{2.94} having a perovskite crystal structure, La_{0.55}Li_{0.35}TiO₃, LiTi₂P₃O₁₂ having a natrium super ionic conductor (NASICON) crystal structure, Li_{1+xh+yh}(Al,Ga)ₓₕ(Ti,Ge)₂₋ₓₕSi_{yh}P_{3-yh}O₁₂ (0 ≤ xh ≤ 1 and 0 ≤ yh ≤ 1), and Li₇La₃Zr₂O₁₂ (LLZ) having a garnet crystal structure. Ceramic materials in which element substitution is performed for LLZ are also known. Examples thereof include Li_{6.24}La₃Zr₂Al_{0.24}O_{11.98} and Li_{6.25}Al_{0.25}La₃Zr₂O₁₂ in which partial element substitution using Al is performed for LLZ, Li_{6.6}La₃Zr_{1.6}Ta_{0.4}O₁₂ in which partial element substitution using Ta is performed for LLZ, and Li_{6.75}La₃Zr_{1.75}Nb_{0.25}O₁₂ in which partial element substitution using Nb is performed for LLZ. Other examples include LLZ-based ceramic materials in which element substitution using at least one of magnesium (Mg) and A (A includes at least one element selected from the group consisting of calcium (Ca), strontium (Sr), and barium (Ba)) is performed for LLZ. Phosphorus compounds containing Li, P and 0 are also desirable. Examples thereof include lithium phosphate (Li₃PO₄), LiPON in which one or more oxygen atoms in lithium phosphate are replaced with nitrogen, and LiPOD¹ (wherein D¹ includes at least one selected from Ti, V, Cr, Mn, Fe, Co, Ni, Cu, Zr, Nb, Mo, Ru, Ag, Ta, W, Pt, Au, and the like). LiA¹ON (wherein A¹ includes at least one selected from Si, B, Ge, Al, C. Ga, and the like) can also be preferably used. Specific examples include Li₂O-Al₂O₃-SiO₂-P₂O₅-TiO₂-GeO₂ and Li₂O-Al₂O₃-SiO₂-P₂O₃-TiO₂.

The oxide-based solid electrolyte preferably contains lithium. Oxide-based solid electrolytes containing lithium are used in solid-state batteries in which lithium ions are used as carriers, and are particularly preferred in that they provide electrochemical devices having high energy density.

The oxide-based solid electrolyte is preferably an oxide having a crystal structure. Oxides having a crystal structure are particularly preferred in terms of good Li ion conductivity. The oxide having a crystal structure may be of perovskite type (La_{0.51}Li_{0.34}TiO_{2.94} etc.), NASICON type (Li_{1.3}Al_{0.3}Ti_{1.7}(PO₄)₃ etc.), or garnet type (Li₇La₃Zr₂O₁₂ (LLZ) etc.). Preferred among these is the NASICON type.

The volume average particle size of the oxide solid electrolyte is not limited. Still, the volume average particle size is preferably 0.01 pm or greater, more preferably 0.03 pm or greater. The upper limit is preferably 100 pm or smaller, more preferably 50 pm or smaller. The average particle size of the oxide-based solid electrolyte particles is measured by the following procedure. A 1% by mass dispersion of the oxide-based solid electrolyte particles is prepared by dilution with water (or heptane in the case of a substance unstable in water) in a 20-mL sample bottle. The diluted dispersion sample is irradiated with 1-kHz ultrasonic waves for 10 minutes, and immediately thereafter used for the test. Data was acquired from this dispersion sample 50 times using a quartz cell for measurement at a temperature of 25°C with a laser diffraction/scattering particle size distribution analyzer LA-920 (HORIBA), and the volume average particle size was determined. For other detailed conditions and the like, JIS Z8828:2013 "Particle size analysis - Dynamic light scattering" is referred as necessary. Five samples are prepared for each level and the average value is used.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the above-mentioned components such as the positive electrode, the negative electrode, and the solid electrolyte layer. Specifically, the battery may be of cylindrical type, square type, coin type, or laminate type.

The solid-state secondary battery can be produced by, for example, laminating a positive electrode, a solid electrolyte layer sheet, and a negative electrode in this order and pressing them.

The embodiments have been described above, and it will be understood that various changes in form or detail can be made without departing from the gist and scope of the claims.

### EXAMPLES

The disclosure is more specifically described with reference to examples, but the disclosure is not intended to be limited by these examples.

Various physical properties were measured by the following methods.

<Average primary particle size>

The aqueous TFE-based polymer dispersion was diluted with water to a solid content concentration of 0.15% by mass. The transmittance of 550-nm incident light relative to the unit length of the resulting diluted latex was measured. The Feret diameters in a transmission electron microscopic image were measured and the number-based length average primary particle size was determined therefrom. A calibration curve was obtained from these values. Using this calibration curve, the average primary particle size was determined from the measured transmittance of 550-nm incident light on each sample.

### <Polymer solid content concentration>

A TFE-based polymer aqueous dispersion in an amount of 1 g was dried in an air dryer at 150°C for 60 minutes, and the ratio of the mass of the heating residue to the mass (1 g) of the aqueous dispersion, expressed as a percentage, was used as the polymer solid concentration.

### <Amount of modifying monomer>

The TFE-based polymer powder was press-molded into a thin-film disc and the thin-film disc was subjected to FT-IR measurement, so that infrared absorbances were obtained. The CTFE content was determined by multiplying the ratio (absorbance at 957 cm⁻¹)/(absorbance at 2360 cm⁻¹) by 0.58.

The TFE-based polymer powder was press-molded into a thin-film disc and the thin-film disc was subjected to FT-IR measurement, so that infrared absorbances were obtained. The PPVE content was determined by multiplying the ratio (absorbance at 995 cm⁻¹)/(absorbance at 935 cm⁻¹) by 0.14.

The TFE-based polymer powder was press-molded into a thin-film disc and the thin-film disc was subjected to FT-IR measurement, so that infrared absorbances were obtained. The HFP content was determined by multiplying the ratio (absorbance at 982 cm⁻¹)/(absorbance at 935 cm⁻¹) by 0.3.

### <Standard specific gravity (SSG)>

The SSG was determined by the water displacement method in conformity with ASTM D792 using a sample molded in conformity with ASTM D4895-89.

### <Extrusion pressure>

An amount of 60 g of the TFE-based polymer powder and 12.3 g of a hydrocarbon oil (trade name: Isopar G (registered trademark), ExxonMobil Corp.) as an extrusion aid were mixed for three minutes in a polyethylene container. The mixture was packed in a cylinder of an extruder at room temperature (25 1 2°C) and maintained for one minute while applying a load of 0.47 MPa to a piston inserted into the cylinder. Then, the mixture was extruded through an orifice (diameter: 0.5 mm, land length: 1.5 mm, introduction angle: 30°) at a ram speed of 20 mm/min. A ratio of the cross-sectional area of the cylinder to the cross-sectional area of the orifice was 2500. The load (N) at which the pressure was in equilibrium in the late stage of the extrusion operation was divided by the cross-sectional area of the cylinder. The obtained value was defined as the extrusion pressure (MPa).

### <Endothermic peak temperature>

The endothermic peak temperature was defined as the temperature corresponding to the minimum point on a heat-of-fusion curve obtained by performing differential scanning calorimetry (DSC) at a temperature-increasing rate of 2°C/min on a TFE-based polymer powder that had never been heated to a temperature of 300°C or higher.

### <Water content>

About 20 g of the TFE-based polymer powder was weighed out, and its mass was measured before and after heating at 150°C for two hours. The water content was calculated by the formula below. A sample was taken three times, and the samples were each subjected to the calculation. The calculated values were averaged. The average was taken as the water content.

Water content (% by mass) = [(mass (g) of TFE-based polymer powder before heating) - (mass (g) of TFE-based polymer powder after heating)J/(mass (g) of TFE-based polymer powder before heating) x 100

### <Amounts of perfluoroether carboxylic acids A and B>

One gram of the TFE-based polymer powder was weighed out, and 10 g (12.6 ml) of methanol was added thereto, followed by sonication for 60 minutes to obtain an extract. The extract was subjected to LC/MS/MS analysis. The fluorine-containing compound in the extract was measured using a liquid chromatograph-mass spectrometer (Waters, LC-MS ACQUITY UPLC/TQD). Table 1 shows the structure of the measurement device and the LC-MS measurement conditions. Standard aqueous solutions with known five or more different content levels of the fluorine-containing compound were prepared and subjected to LC/MS analysis.

The relationships between the contents and the areas corresponding to the contents were plotted to create a calibration curve. The area in the LC/MS chromatogram of the fluorine-containing compound in the extract was converted to the amount of the fluorine-containing compound using the calibration curve.

The lower limit of quantitation in this measurement method is 10 ppb by mass.

**[Table 1]**

| LC system | | | | |
|---|---|---|---|---|
| | Device | Acquity UPLC from Waters | | |
| | Column | Acquity UPLC BEH C18 1.7 µm (2.1 × 50 mm) from Waters | | |
| | Mobile phase | A CH₃CN | | |
| | | B 20 mM CH₃COONH₄/H₂O | | |
| | | | 0 → 1.5 min | A:B = 10:90 |
| | | | 1.5 → 8.5 min | A:B = 10:90 → A:B = 90:10 Linear gradient |
| | | | 8.5 → 10 min | A:B = 90:10 |
| | Flow rate | | 0.4 mL/min | |
| | Column temperature | 40 °C | | |
| | Sample injection amount | 5 µL | | |

| MS system | | | | |
|---|---|---|---|---|
| | Device | TQ Detector | | |
| | Measurement mode | MRM(Multiple Reaction Monitoring) | | |
| | Ionization method | Electrospray ionization | | |
| | | Negative mode | | |

A white solid A (perfluoroether carboxylic acid A) was obtained by the method described in Synthetic Example 1 in WO 2021/045228.

The following compounds were prepared.
Ammonium salt of perfluoroether carboxylic acid B: Ammonium perfluoro(2-methyl-3-oxahexanoate) having a structure of CF₃CF₂CF₂OCF(CF₃)COONH₄ available from FUJIFILM Wako Pure Chemical Corporation
Hydrophilic monomer: Ammonium 2,3,3,3-tetrafluoro-2-[(1,1,2-trifluoro-2-propenyl)oxy]propanoate having a structure of CH₂=CFCF₂OCF(CF₃)COONH₄

### Production Example 1

A 6-liter stainless steel autoclave equipped with a stainless steel stirring blade and a temperature-controlling jacket was charged with 3580 g of deionized water, 100 g of paraffin wax, and 5.4 g of the white solid A. The autoclave was heated to 80°C while the inside was replaced with nitrogen gas to remove oxygen. After adding 1.20 g of CTFE, TFE was pressed into the autoclave until the pressure in the system reached 0.78 MPaG. Then, the temperature in the system was maintained at 80°C while stirring. Next, an aqueous solution of 360 mg of disuccinic acid peroxide dissolved in 20 g of water and an aqueous solution of 10 mg of ammonium persulfate dissolved in 20 g of water were pressed into the system with TFE to start polymerization reaction. While the pressure in the system decreased along with the progress of the polymerization reaction, TFE was added to maintain the pressure in the system at 0.78 MPaG and the temperature in the system was maintained at 80°C. When 1530 g of TFE was consumed from the start of polymerization (conversion rate 90%), 4.2 g of CTFE was pressed into the system with TFE. The polymerization further continued. When the amount of TFE-based polymerized from the start of polymerization reached about 1700 g, stirring and supply of TFE were stopped, immediately followed by releasing of the gas in the system to a normal pressure to terminate the polymerization reaction. The aqueous dispersion was taken out and cooled. The paraffin wax was separated from the aqueous dispersion to obtain an aqueous TFE-based polymer dispersion. The aqueous TFE-based polymer dispersion had an average primary particle size of 241 nm and a solid concentration of 32.0% by mass. The particles of the TFE-based polymer have a core-shell structure.

### Manufacturing Example 1

The aqueous TFE-based polymer dispersion obtained in Production Example 1 was diluted to a solid content concentration of 13% by mass. The dilution was stirred vigorously in a container equipped with a stirrer for coagulation, and water was filtered out, whereby a wet TFE-based polymer powder was obtained.

The resulting wet TFE-based polymer powder was placed in a stainless-steel mesh tray (amount: 2.0 g/cm²), and the mesh tray was heated in a hot air circulating electric furnace at 145°C. After 18 hours, the mesh tray was taken out and air-cooled, whereby TFE-based polymer powder 1 was obtained.

The TFE-based polymer powder 1 had a CTFE content of 0.23% by mass, a SSG of 2.170, an extrusion pressure of 59 MPa, an endothermic peak temperature of 336°C, a water content of 0.001% by mass, and a perfluoroether carboxylic acid A content of less than 10 ppb by mass.

### Production Example 2

A 6-liter stainless steel autoclave equipped with a stainless steel stirring blade and a temperature-controlling jacket was charged with 3560 g of deionized water, 100 g of paraffin wax, and 1.5 g of the white solid A. The autoclave was heated to 70°C while the inside was replaced with nitrogen gas to remove oxygen. After adding 3.0 g of PPVE, TFE was pressed into the autoclave until the pressure in the system reached 0.78 MPaG. Then, the temperature in the system was maintained at 70°C while stirring. Next, an aqueous solution of 326 mg of disuccinic acid peroxide dissolved in 20 g of water and an aqueous solution of 12 mg of ammonium persulfate dissolved in 20 g of water were pressed into the system with TFE to start polymerization reaction. While the pressure in the system decreased along with the progress of the polymerization reaction, TFE was added to maintain the pressure in the system at 0.78 MPaG and the temperature in the system was maintained at 70°C. When 170 g of TFE was consumed from the start of polymerization, 2.2 g of the white solid A was pressed into the system with TFE. When 1530 g of TFE was consumed from the start of polymerization (conversion rate 90%), 0.28 g of methanol was pressed into the system with TFE. The polymerization further continued. When the amount of TFE-based polymerized from the start of polymerization reached about 1700 g, stirring and supply of TFE were stopped, immediately followed by releasing of the gas in the system to a normal pressure to terminate the polymerization reaction. The aqueous dispersion was taken out and cooled. The paraffin wax was separated from the aqueous dispersion to obtain an aqueous TFE-based polymer dispersion. The aqueous TFE-based polymer dispersion had an average primary particle size of 243 nm and a solid concentration of 31.6% by mass. The particles of the TFE-based polymer have a core-shell structure.

### Manufacturing Example 2

The aqueous TFE-based polymer dispersion obtained in Production Example 2 was diluted to a solid content concentration of 13% by mass. The dilution was stirred vigorously in a container equipped with a stirrer for coagulation, and water was filtered out, whereby a wet TFE-based polymer powder was obtained.

The resulting wet TFE-based polymer powder was placed in a stainless-steel mesh tray (amount: 2.0 g/cm²), and the mesh tray was heated in a hot air circulating electric furnace at 145°C. After 18 hours, the mesh tray was taken out and air-cooled, whereby TFE-based polymer powder 2 was obtained.

The TFE-based polymer powder 2 had a PPVE content of 0.13% by mass, a SSG of 2.166, an extrusion pressure of 56 MPa, an endothermic peak temperature of 333°C, a water content of 0.000% by mass, and a perfluoroether carboxylic acid A content of less than 10 ppb by mass.

### Production Example 3

A 6-liter stainless steel autoclave equipped with a stainless steel stirring blade and a temperature-controlling jacket was charged with 3560 g of deionized water, 100 g of paraffin wax, and 0.9 g of the white solid A. The autoclave was heated to 70°C while the inside was replaced with nitrogen gas to remove oxygen. After adding 0.67 g of PPVE and 0.37 g of HFP, TFE was pressed into the autoclave until the pressure in the system reached 0.78 MPaG. Then, the temperature in the system was maintained at 70°C while stirring. Next, an aqueous solution of 322 mg of disuccinic acid peroxide dissolved in 20 g of water and an aqueous solution of 13 mg of ammonium persulfate dissolved in 20 g of water were pressed into the system with TFE to start polymerization reaction. While the pressure in the system decreased along with the progress of the polymerization reaction, TFE was added to maintain the pressure in the system at 0.78 MPaG and the temperature in the system was maintained at 70°C. When 160 g of TFE was consumed from the start of polymerization, 4.5 g of the white solid A was pressed into the system with TFE. When 1440 g of TFE was consumed from the start of polymerization (conversion rate 90%), 1.57 g of HFP and 0.5 g of methanol were pressed into the system with TFE. The polymerization further continued. When the amount of TFE-based polymerized from the start of polymerization reached 1600 g, stirring and supply of TFE were stopped, immediately followed by releasing of the gas in the system to a normal pressure to terminate the polymerization reaction. The aqueous dispersion was taken out and cooled. The paraffin wax was separated from the aqueous dispersion to obtain an aqueous TFE-based polymer dispersion. The aqueous TFE-based polymer dispersion had an average primary particle size of 249 nm and a solid concentration of 30.7% by mass. The particles of the TFE-based polymer have a core-shell structure.

### Manufacturing Example 3

The aqueous TFE-based polymer dispersion obtained in Production Example 3 was diluted to a solid content concentration of 13% by mass. The dilution was stirred vigorously in a container equipped with a stirrer for coagulation, and water was filtered out, whereby a wet TFE-based polymer powder was obtained.

The resulting wet TFE-based polymer powder was placed in a stainless-steel mesh tray (amount: 2.0 g/cm²), and the mesh tray was heated in a hot air circulating electric furnace at 145°C. After 18 hours, the mesh tray was taken out and air-cooled, whereby TFE-based polymer powder 3 was obtained.

The TFE-based polymer powder 3 had a PPVE content of 0.03% by mass, a HFP content of 0.05% by mass, a SSG of 2.176, an extrusion pressure of 49 MPa, an endothermic peak temperature of 336°C, a water content of 0.001% by mass, and a perfluoroether carboxylic acid A content of less than 10 ppb by mass.

### Production Example 4

An aqueous TFE-based polymer dispersion was obtained as in Production Example 1, except that the 5.4 g of the white solid A was changed to 16 g of the ammonium salt of perfluoroether carboxylic acid B and 30 mg of the hydrophilic monomer. The aqueous TFE-based polymer dispersion had an average primary particle size of 245 nm and a solid concentration of 31.8% by mass. The particles of the TFE-based polymer have a core-shell structure.

### Manufacturing Example 4

The aqueous TFE-based polymer dispersion obtained in Production Example 4 was diluted to a solid content concentration of 13% by mass. The dilution was stirred vigorously in a container equipped with a stirrer for coagulation, and water was filtered out, whereby a wet TFE-based polymer powder was obtained.

The resulting wet TFE-based polymer powder was placed in a stainless-steel flat tray (a tray with no air permeability on the bottom and sides), and the flat tray was heated in a hot air circulating electric furnace at 145°C. After 18 hours, the mesh tray was taken out and air-cooled, whereby TFE-based polymer powder 4 was obtained.

The TFE-based polymer powder 4 had a CTFE content of 0.23% by mass, a SSG of 2.172, an extrusion pressure of 60 MPa, an endothermic peak temperature of 336°C, a water content of 0.018% by mass, and a perfluoroether carboxylic acid B content of 180 ppb by mass.

### Production Example 5

A 6-liter stainless steel autoclave equipped with a stainless steel stirring blade and a temperature-controlling jacket was charged with 3480 g of deionized water, 100 g of paraffin wax, and 5.3 g of the white solid A. The autoclave was heated to 70°C while the inside was replaced with nitrogen gas to remove oxygen. TFE was pressed into the autoclave until the pressure in the system reached 0.78 MPaG. Then, the temperature in the system was maintained at 70°C while stirring. Next, an aqueous solution of 15.0 mg of ammonium persulfate dissolved in 20 g of water was pressed into the system with TFE to start polymerization reaction. While the pressure in the system decreased along with the progress of the polymerization reaction, TFE was added to maintain the pressure in the system at 0.78 MPaG and the temperature in the system was maintained at 70°C.

When 400 g of TFE was consumed from the start of polymerization, an aqueous solution of 18.0 mg of hydroquinone as a radical scavenger dissolved in 20 g of water was pressed into the system with TFE. The polymerization further continued. When the amount of TFE-based polymerized from the start of polymerization reached about 1200 g, stirring and supply of TFE were stopped, immediately followed by releasing of the gas in the system to a normal pressure to terminate the polymerization reaction. The aqueous dispersion was taken out and cooled. The paraffin wax was separated from the aqueous dispersion to obtain an aqueous TFE-based polymer dispersion. The aqueous TFE-based polymer dispersion had an average primary particle size of 310 nm and a solid concentration of 25.30 by mass.

### Manufacturing Example 5

The aqueous TFE-based polymer dispersion obtained in Production Example 5 was diluted to a solid content concentration of 13% by mass. The dilution was stirred vigorously in a container equipped with a stirrer for coagulation, and water was filtered out, whereby a wet TFE-based polymer powder was obtained.

The resulting wet TFE-based polymer powder was placed in a stainless-steel mesh tray (amount: 2.0 g/cm²), and the mesh tray was heated in a hot air circulating electric furnace at 180°C. After 20 hours, the mesh tray was taken out and air-cooled, whereby TFE-based polymer powder 5 was obtained.

The TFE-based polymer powder 5 had a SSG of 2.156, an endothermic peak temperature of 344°C, a water content of 0.000% by mass, and a perfluoroether carboxylic acid A content of less than 10 ppb by mass. The extrusion pressure was unmeasurable because extrusion could not be performed under the above conditions. It is thus clear that the extrusion pressure exceeds 100 MPa.

### Manufacturing Example 6

The wet TFE-based polymer powder produced in Manufacturing Example 1 was placed in a flat tray, and the flat tray was heated in a hot air circulating electric furnace at 145°C. After 5 hours, the flat tray was taken out and air-cooled, whereby TFE-based polymer powder 6 was obtained.

The TFE-based polymer powder 6 had a CTFE content of 0.23% by mass, a SSG of 2.170, an extrusion pressure of 58 MPa, an endothermic peak temperature of 336°C, and a water content of 0.137% by mass.

The TFE-based polymers obtained as above were evaluated by the methods below.

### Evaluation of electrolyte-containing battery

Mixture sheets of Examples 1 and 2, Examples A1 and A2, and Comparative Examples 1 and 2 were produced and evaluated by the following procedures.

### <Production of positive electrode mixture sheet>

The active material and the conductive aid were weighed, and the materials were fed into a V-shaped mixer, followed by mixing at 37 rpm for 10 minutes, whereby a mixture containing the active material and the conductive aid was obtained. To the mixture was added a binder (TFE-based polymer powder) weighed, and the resulting mixture was sufficiently cooled in a thermostatic bath at 5°C. The mixture containing the active material, the conductive aid, and the binder was fed into a Henschel mixer and processed at 1000 rpm for three minutes to homogenize the mixture.

Thereafter, the mixture was sufficiently warmed in a thermostatic bath at 50°C. Then, the mixture was treated in a pressure kneader (Dl-S: Nihon Spindle Manufacturing Co., Ltd.) for five minutes (32 rpm, heater 50°C, pressure 0.5 MPa) to promote fibrillation, whereby obtaining a bulky electrode mixture with aggregating properties. The bulky electrode mixture was fed into a Henschel mixer and processed at 300 rpm for one minute for further pulverization, thereby obtaining an electrode mixture.

The electrode mixture was fed to parallel metal rolls (temperature: 80°C, rotation speed: 1 m/min) and rolled, whereby an electrode mixture sheet was obtained. The resulting rolled sheet was coarsely crushed by folding it into two, and the electrode mixture was again fed to the metal rolls (temperature: 80°C, rotation speed: 1 m/min) and rolled, whereby an electrode mixture sheet with a higher strength was obtained.

The electrode mixture sheet was then fed to a roll press machine to adjust the gap. The thickness of the positive electrode mixture layer was finally adjusted to 90 um.

Tables 2 shows the material types and compositions.

**[Table 2]**

| | (A) Active material | (B) Binder | (C) Conductive aid | Composition ratio A:B:C (mass ratio) |
|---|---|---|---|---|
| Comparative Example 1 | Li(Ni_{0.8}Mn_{0.1}Co_{0.1})O₂ | TFE-based polymer powder 5 | denka Li-400 | 95:2:3 |
| Comparative Example 2 | Li(Ni_{0.8}Mn_{0.1}Co_{0.1})O₂ | TFE-based polymer powder 6 | denka Li-400 | 95:2:3 |
| Example 1 | Li(Ni_{0.8}Mn_{0.1}Co_{0.1})O₂ | TFE-based polymer powder 1 | denka Li-400 | 95:2:3 |
| Example 2 | Li(Ni_{0.8}Mn_{0.1}Co_{0.1})O₂ | TFE-based polymer powder 2 | denka Li-400 | 95:2:3 |
| Example A1 | Li(Ni_{0.8}Mn_{0.1}Co_{0.1})O₂ | TFE-based polymer powder 3 | denka Li-400 | 95:2:3 |
| Example A2 | Li(Ni_{0.8}Mn_{0.1}Co_{0.1})O₂ | TFE-based polymer powder 4 | denka Li-400 | 95:2:3 |

| | | | | |
|---|---|---|---|---|
| denka Li-400: carbon black available from Denka Company Limited. | | | | |

### <Evaluation of aggregating properties of powder>

The electrode mixture before fed to the parallel metal rolls was sieved using a sieve with 0.18-mm mesh aperture (JIS Z 8801) for 30 seconds. The electrode mixture was evaluated as x (Bad) when aggregates remained on the mesh and evaluated as ∘ (Good) when it completely passed through the sieve. The results are shown in Table 3.

### <Measurement of strength of positive electrode mixture sheet>

The positive electrode mixture sheet was cut, whereby a strip-shaped test piece with a width of 4 mm was produced. A tensile tester (AGS-100NX, available from Shimadzu Corp.) was used to determine the strength of the test piece under the condition of 100 mm/min. The chuck distance was set to 30 mm. A displacement was applied to the test piece until breaking, and the maximum stress of the measured results was taken as the strength of each sample. The test was performed with N = 8. The test results were averaged, and the average was compared with the average in Comparative Example 1 taken as 100%. The coefficient of variation was calculated to evaluate the variability. The results are shown in Table 3.

### <Evaluation of flexibility of positive electrode mixture sheet (bending test)>

The obtained electrode mixture sheet was cut, whereby a test piece with a width of 4 cm and a length of 10 cm were produced. The test piece was then wrapped around a Φ10-mm rod, and the test piece was visually checked for damage such as scratches and cracks. When no damage was found, the test was conducted with an even thinner Φ5-mm rod, and the test piece was checked for damage. When no damage was found again, the test was conducted with an even thinner Φ2-mm rod, and the test piece was checked for damage. The results were classified from A to D. The results are shown in Table 3.
A: No damage with Φ2-mm rod
B: Damaged with Φ2-mm rod
C: Damaged with Φ5-mm rod
D: Damaged with Φ10-mm rod

<Production of positive electrode>

The positive electrode mixture sheet was bonded to 20-µm aluminum foil in the following manner.

The adhesive used was a slurry prepared by dissolving polyvinylidene fluoride (PVDF) in N-methylpyrrolidone (NMP) and dispersing carbon black therein at a ratio of 80:20. The above adhesive was applied to aluminum foil and dried on an electric griddle at 120°C for 15 minutes, whereby a current collector with an adhesive layer was formed.

Thereafter, the positive electrode mixture sheet was placed on the current collector with an adhesive layer, and the positive electrode mixture sheet and the current collector were bonded to each other using a roll press machine heated to 100°C. The workpiece was cut into the desired size, followed by tab attachment, whereby a positive electrode was obtained.

### <Production of negative electrode>

First, 98 parts by mass of a carbonaceous material (graphite) was mixed with 1 part by mass of an aqueous dispersion of sodium carboxymethyl cellulose (concentration of sodium carboxymethyl cellulose: 1% by mass) and 1 part by mass of an aqueous dispersion of styrene-butadiene rubber (concentration of styrene-butadiene rubber: 50% by mass) respectively serving as a thickening agent and a binder. The components were mixed using a disperser to form slurry. The resulting slurry was applied to 10-pm-thick copper foil and dried. The workpiece was rolled using a press and cut to provide a piece in a desired size, followed by tab attachment. This piece was used as a negative electrode.

### <Preparation of electrolyte solution>

A solvent mixture of ethylene carbonate (EC) and ethyl methyl carbonate (EMC) (EC:EMC = 30:70 (volume ratio)) was weighed as an organic solvent into a sample bottle, and fluoroethylene carbonate (FEC) and vinylene carbonate (VC) each in an amount of 1% by mass were added thereto and dissolved therein, whereby a mixed solution was prepared. A LiPF₆ salt was mixed with this mixed solution at 23°C so that the concentration thereof in the electrolyte solution was 1.1 mol/L.

### <Production of aluminum laminate cell>

The above positive electrode and negative electrode were placed to face each other with a 20-pm-thick porous polyethylene film (separator) in between. The non-aqueous electrolyte solution prepared above was injected thereinto and the non-aqueous electrolyte solution was made to sufficiently permeate into the components such as the separator. The workpiece was then sealed, pre-charged, and aged, whereby a lithium-ion secondary battery was produced.

### <Evaluation of storage properties (remaining capacity, amount of gas generated>

The lithium-ion secondary battery produced above was subjected to constant current/constant voltage charge (hereinafter, referred to as CC/CV charge) (0.1 C cut off) to 4.3 V at a current corresponding to 0.33 C at 25°C, and then discharged to 3 V at a constant current of 0.33 C. This was counted as one cycle, and the discharge capacity at the third cycle was used to determine the initial discharge capacity.

The battery whose initial discharge capacity had been evaluated was again subjected to CC/CV charge (0.1 C cut off) at 25°C to 4.3 V, and the volume of the battery was determined by the Archimedes' method. After determining the volume of the battery, the battery was stored at high temperature at 60°C for 30 days. After storage at high temperature, the battery was sufficiently cooled, and the volume thereof was determined at 25°C. Based on the difference in volume of the battery before and after the storage test, the amount of gas generated was determined. The amount of gas generated was compared with the amount of gas generated in Comparative Example 1 taken as 100.

After determination of the amount of gas generated, the battery was discharged at 0.33 C at 25°C to 3 V, and the remaining capacity was determined.

The ratio of the remaining capacity after storage at high temperature to the initial discharge capacity was calculated, and this was used as the remaining capacity rate (%). (Remaining capacity)/(Initial discharge capacity) x 100 = Remaining capacity rate (%)

The results are shown in Table 3.

**[Table 3]**

| | Aggregating properties | Strength | Coefficient of variation | Bending test | Remaining capacity | Amount of gas generated |
|---|---|---|---|---|---|---|
| Comparative Example 1 | × | 100% | 43% | C | 69% | 100 |
| Comparative Example 2 | ○ | 119% | 36% | B | 65% | 118 |
| Example 1 | ○ | 148% | 11% | A | 72% | 90 |
| Example 2 | ○ | 130% | 10% | A | 70% | 95 |
| Example A1 | ○ | 126% | 19% | A | 70% | 96 |
| Example A2 | ○ | 138% | 35% | A | 70% | 99 |

### Evaluation of electrode mixture sheet for solid-state battery

Mixture sheets of Examples 3 and 4, Examples B1 and B2, and Comparative Examples 3 and 4 were produced, and the sheets were evaluated by the following procedures. The production and evaluation were performed in an argon atmosphere.

<Production of positive electrode mixture sheet>

The active material and the conductive aid were weighed, and the materials were fed into a V-shaped mixer, followed by mixing at 37 rpm for 10 minutes, whereby a mixture containing the active material and the conductive aid was obtained. To the mixture were added a binder (TFE-based polymer powder) weighed and a solid electrolyte, and the resulting mixture was allowed to cool sufficiently in a thermostatic bath at 5°C. The mixture containing the active material, the conductive aid, the binder, and the solid electrolyte was fed into a Henschel mixer and processed at 300 rpm for two minutes to homogenize the mixture.

Then, the mixture was thoroughly heated in a thermostatic bath at 40°C, and processed in a Henschel mixer at 1000 rpm for three minutes so that fibrillation was promoted, whereby an electrode mixture was obtained. The electrode mixture was fed to parallel metal rolls (temperature: 80°C, rotation speed: 1 m/min) and rolled, whereby an electrode mixture sheet was obtained. The resulting rolled sheet was coarsely crushed by folding it into two, and the electrode mixture was again fed to the metal rolls (temperature: 80°C, rotation speed: 1 m/min) and rolled, whereby an electrode mixture sheet with a higher strength was obtained.

The electrode mixture sheet was then fed to a roll press machine to adjust the gap. The thickness of the positive electrode mixture layer was finally adjusted to 100 um.

Tables 4 shows the material types and compositions.

**[Table 4]**

| | (A) Active material | (B) Binder | (C) Conductive aid | (D) Solid electrolyte | Composition ratio AB:C:D (mass ratio) |
|---|---|---|---|---|---|
| Comparative Example 3 | Li(Ni_{0.8}Mn_{0.1}Co_{0.1})O₂ | TFE-based polymer powder 5 | SuperP Li | Li₁₀SnP₂S₁₂ | 70:1:1.5:27.5 |
| Comparative Example 4 | Li(Ni_{0.8}Mn_{0.1}Co_{0.1})O₂ | TFE-based polymer powder 6 | SuperP Li | Li₁₀SnP₂S₁₂ | 70:1:1.5:27.5 |
| Example 3 | Li(Ni_{0.8}Mn_{0.1}Co_{0.1})O₂ | TFE-based polymer powder 1 | SuperP Li | Li₁₀SnP₂S₁₂ | 70:1:1.5:27.5 |
| Example 4 | Li(Ni_{0.8}Mn_{0.1}Co_{0.1})O₂ | TFE-based polymer powder 2 | SuperP Li | Li₁₀SnP₂S₁₂ | 70:1:1.5:27.5 |
| Example B1 | Li(Ni_{0.8}Mn_{0.1}Co_{0.1})O₂ | TFE-based polymer powder 3 | SuperP Li | Li₁₀SnP₂S₁₂ | 70:1:1.5:27.5 |
| Example B2 | Li(Ni_{0.8}Mn_{0.1}Co_{0.1})O₂ | TFE-based polymer powder 4 | SuperP Li | Li₁₀SnP₂S₁₂ | 70:1:1.5:27.5 |

| | | | | | |
|---|---|---|---|---|---|
| SuperP Li: carbon black available from Imerys | | | | | |

### <Measurement of strength of positive electrode mixture sheet>

The positive electrode mixture sheet was cut, whereby a strip-shaped test piece with a width of 4 mm was produced. A tensile tester (AGS-100NX, available from Shimadzu Corp.) was used to determine the strength of the test piece under the condition of 100 mm/min. The chuck distance was set to 30 mm. A displacement was applied to the test piece until breaking, and the maximum stress of the measured results was taken as the strength of each sample. The test was performed with N = 3. The test results were averaged, and the average was compared with the average in Comparative Example 3 taken as 100%. The results are shown in Table 5.

### <Evaluation of flexibility of positive electrode mixture sheet (bending test)>

The obtained electrode mixture sheet was cut, whereby a test piece with a width of 4 cm and a length of 10 cm was produced. The test piece was then wrapped around a Φ10-mm rod, and the test piece was visually checked for damage such as scratches and cracks. When no damage was found, the test was conducted with an even thinner Φ5-mm rod, and the test piece was checked for damage. When no damage was found again, the test was conducted with an even thinner Φ2-mm rod, and the test piece was checked for damage. The results were classified from A to D. The results are shown in Table 5.
A: No damage with Φ2-mm rod
B: Damaged with Φ2-mm rod
C: Damaged with Φ5-mm rod
D: Damaged with Φ10-mm rod

**[Table 5]**

| | Strength | Bending test |
|---|---|---|
| Com parative Example 3 | 100% | C |
| Com parative Example 4 | 129% | C |
| Example 3 | 148% | B |
| Example 4 | 141% | B |
| Example B1 | 135% | B |
| Example B2 | 134% | B |

### Evaluation of solid electrolyte mixture sheet

Mixture sheets of Examples 5 and 6, Examples C1 and C2, and Comparative Examples 5 and 6 were produced and evaluated by the following procedures. The production and evaluation were performed in an argon atmosphere.

### <Production of solid electrolyte mixture sheet>

The binder (TFE-based polymer powder) weighed was allowed to cool sufficiently in a thermostatic bath at 5°C, fed into a Henschel mixer, and processed at 300 rpm for two minutes, whereby pulverization was performed.

The pulverized binder and the solid electrolyte were each weighed, and cooled sufficiently in a thermostatic bath at 5°C. They were fed into a Henschel mixer and processed at 300 rpm for one minute to homogenize the mixture.

Then, the mixture was thoroughly heated in a thermostatic bath at 40°C, and processed in a Henschel mixer at 1000 rpm for one minute so that fibrillation was promoted, whereby an electrolyte mixture was obtained.

The electrode mixture was fed to parallel metal rolls (temperature: 80°C, rotation speed: 1 m/min) and rolled, whereby an electrolyte mixture sheet was obtained. The resulting rolled sheet was coarsely crushed by folding it into two, and the electrolyte mixture was again fed to the metal rolls (temperature: 80°C, rotation speed: 1 m/min) and rolled, whereby an electrolyte mixture sheet with a higher strength was obtained.

The electrolyte mixture sheet was then fed into a roll press machine to adjust the gap. The thickness of the electrolyte mixture sheet was finally adjusted to 110 um.

Tables 6 shows the material types and compositions.

**[Table 6]**

| | (A) Active material | (B) Binder | (C) Conductive aid | (D) Solid electrolyte | Composition ratio AB:C:D (mass ratio) |
|---|---|---|---|---|---|
| Comparative Example 5 | None | TFE-based polymer powder 5 | None | Li₁₀SnP₂S₁₂ | 0:2:0:98 |
| Comparative Example 6 | None | TFE-based polymer powder 6 | None | Li₁₀SnP₂S₁₂ | 0:2:0:98 |
| Example 5 | None | TFE-based polymer powder 1 | None | Li₁₀SnP₂S₁₂ | 0:2:0:98 |
| Example 6 | None | TFE-based polymer powder 2 | None | Li₁₀SnP₂S₁₂ | 0:2:0:98 |
| Example C1 | None | TFE-based polymer powder 3 | None | Li₁₀SnP₂S₁₂ | 0:2:0:98 |
| Example C2 | None | TFE-based polymer powder 4 | None | Li₁₀SnP₂S₁₂ | 0:2:0:98 |

### <Measurement of strength of solid electrolyte mixture sheet>

The solid electrolyte mixture sheet was cut, whereby a strip-shaped test piece with a width of 4 mm was produced. A tensile tester (AGS-100NX, available from Shimadzu Corp.) was used to determine the strength of the test piece under the condition of 100 mm/min. The chuck distance was set to 30 mm. A displacement was applied to the test piece until breaking, and the maximum stress of the measured results was taken as the strength of each sample. The test was performed with N = 3. The test results were averaged, and the average was compared with the average in Comparative Example 5 taken as 100%. The results are shown in Table 7.

### <Evaluation of flexibility of solid electrolyte mixture sheet (bending test)>

The obtained solid electrolyte mixture sheet was cut, whereby a test piece with a width of 4 cm and a length of 10 cm was produced. The test piece was then wrapped around a Φ10-mm rod, and the test piece was visually checked for damage such as scratches and cracks. When no damage was found, the test was conducted with an even thinner Φ5-mm rod, and the test piece was checked for damage. When no damage was found again, the test was conducted with an even thinner Φ2-mm rod, and the test piece was checked for damage. The results were classified from A to D. The results are shown in Table 7.
A: No damage with Φ2-mm rod
B: Damaged with Φ2-mm rod
C: Damaged with Φ5-mm rod
D: Damaged with Φ10-mm rod

### <Ion conductivity of solid electrolyte mixture sheet>

The solid electrolyte mixture sheet was cut to an appropriate size, and gold was vapor-deposited on both sides of the resulting sheet. Then, the resulting solid electrolyte mixture sheet punched out to a Φ10 mm circle was placed in a pressure cell, the cell screws were tightened with 8 N, and the top and bottom of the cell were caused to function as electrodes. FIG. 1 shows a schematic cross-sectional view of the pressure cell used.

Using this sample, the ion conductivity was measured with an impedance measurement apparatus available from Toyo Corporation under the conditions of 25°C, an AC amplitude modulation of 10 mV, and a frequency of 5 x 10⁶ to 0.1 Hz.

The results are shown in Table 7.

**[Table 7]**

| | Strength | Bending test | Ion conductivity (mS/cm) |
|---|---|---|---|
| Comparative Example 5 | 100% | C | 0.3 |
| Comparative Example 6 | 131% | B | 0.7 |
| Example 5 | 155% | A | 1.1 |
| Example 6 | 149% | A | 1.0 |
| Example C1 | 134% | A | 1.0 |
| Example C2 | 134% | A | 0.8 |

### REFERENCE SIGNS LIST

1: screw
2: nut
3: insulating sheet
4: solid electrolyte mixture sheet
5: deposited gold
6: upper electrode
7: lower electrode

## Claims

1. A tetrafluoroethylene-based polymer for use in a binder for electrochemical devices,
the tetrafluoroethylene-based polymer having an extrusion pressure at a reduction ratio of 2500 of 100 MPa or lower and being substantially free from water.

2. A binder for electrochemical devices consisting substantially only of a tetrafluoroethylene-based polymer,
the tetrafluoroethylene-based polymer having an extrusion pressure at a reduction ratio of 2500 of 100 MPa or lower and being substantially free from water.

3. The binder for electrochemical devices according to claim 2,
wherein the tetrafluoroethylene-based polymer has an extrusion pressure at a reduction ratio of 2500 of 45 MPa or higher and 65 MPa or lower.

4. The binder for electrochemical devices according to claim 2 or 3,
wherein the tetrafluoroethylene-based polymer has a standard specific gravity of 2.200 or less.

5. The binder for electrochemical devices according to any one of claims 2 to 4,
wherein the tetrafluoroethylene-based polymer has an endothermic peak temperature of 320°C or higher.

6. The binder for electrochemical devices according to any one of claims 2 to 5,
wherein the tetrafluoroethylene-based polymer is polytetrafluoroethylene.

7. The binder for electrochemical devices according to any one of claims 2 to 6,
wherein the tetrafluoroethylene-based polymer contains a tetrafluoroethylene unit and a modifying monomer unit that is based on a modifying monomer copolymerizable with tetrafluoroethylene.

8. The binder for electrochemical devices according to claim 7,
wherein the tetrafluoroethylene-based polymer contains the modifying monomer unit in an amount of 10% by mass or less.

9. The binder for electrochemical devices according to claim 8,
wherein the tetrafluoroethylene-based polymer contains the modifying monomer unit in an amount of 0.25% by mass or less.

10. The binder for electrochemical devices according to claim 8 or 9,
wherein the modifying monomer is a compound represented by the following formula (I):
CX³X²=CX³X⁴ (I)
wherein X¹ to X³ are each independently H or F; X⁴ is F, Cl, CF₃, Rf, or O-Rf; and Rf is a perfluoro organic group.

11. The binder for electrochemical devices according to any one of claims 8 to 10,
wherein the modifying monomer is at least one selected from the group consisting of chlorotrifluoroethylene and hexafluoropropylene.

12. The binder for electrochemical devices according to any one of claims 2 to 11,
wherein the tetrafluoroethylene-based polymer is in a powder form.

13. The binder for electrochemical devices according to any one of claims 2 to 12,
wherein the tetrafluoroethylene-based polymer is substantially free from a fluorine-containing compound having a molecular weight of 1000 or less.

14. The binder for electrochemical devices according to any one of claims 2 to 13, which is a binder for batteries or a binder for capacitors.

15. The binder for electrochemical devices according to any one of claims 2 to 14, which is for secondary batteries.

16. An electrode mixture, comprising an electrode active material and the tetrafluoroethylene-based polymer according to claim 1 or the binder for electrochemical devices according to any one of claims 2 to 15.

17. The electrode mixture according to claim 16, which is in a sheet form.

18. An electrode, comprising an electrode active material, a current collector, and the tetrafluoroethylene-based polymer according to claim 1 or the binder for electrochemical devices according to any one of claims 2 to 15.

19. A secondary battery comprising the electrode according to claim 18.
